(19) Europäisches Patentamt / European Patent Office / Office européen des brevets

(11) **EP 4 183 200 B1**

(12) **EUROPEAN PATENT SPECIFICATION**

(45) Date of publication and mention of the grant of the patent:
**25.02.2026 Bulletin 2026/09**

(21) Application number: **22799092.6**

(22) Date of filing: **03.05.2022**

(51) International Patent Classification (IPC):
*H04W 72/04* (2023.01)      *H04W 72/12* (2023.01)
*H04L 1/08* (2006.01)      *H04L 1/1867* (2023.01)

(52) Cooperative Patent Classification (CPC):
**H04W 72/0446; H04L 1/1864; H04L 1/1887; H04L 1/189**

(86) International application number:
**PCT/KR2022/006325**

(87) International publication number:
**WO 2022/235049 (10.11.2022 Gazette 2022/45)**

(54) **METHOD AND APPARATUS FOR IMPROVING RELIABILITY OF UPLINK TRANSMISSION**

VERFAHREN UND VORRICHTUNG ZUR VERBESSERUNG DER ZUVERLÄSSIGKEIT EINER UPLINK-ÜBERTRAGUNG

PROCÉDÉ ET APPAREIL PERMETTANT D'AMÉLIORER LA FIABILITÉ D'UNE TRANSMISSION EN LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 03.05.2021   US 202163183351 P
25.05.2021   US 202163192898 P
12.08.2021   US 202163232512 P
27.08.2021   US 202163237952 P
04.03.2022   US 202263316799 P
25.04.2022   US 202217660590

(43) Date of publication of application:
**24.05.2023 Bulletin 2023/21**

(73) Proprietor: **Samsung Electronics Co., Ltd.**
**Suwon-si, Gyeonggi-do 16677 (KR)**

(72) Inventors:
• **COZZO, Carmela**
**Mountain View, California 94043 (US)**
• **PAPASAKELLARIOU, Aristides**
**Mountain View, California 94043 (US)**

(74) Representative: **Gulde & Partner**
**Patent- und Rechtsanwaltskanzlei mbB**
**Berliner Freiheit 2**
**10785 Berlin (DE)**

(56) References cited:
WO-A1-2020/206083      WO-A1-2020/220253
US-A1- 2020 067 647      US-A1- 2020 221 474

• ASUSTEK: "Remaining issue of PUSCH enhancements for NR URLLC", 15 May 2020 (2020-05-15), XP052345944, Retrieved from the Internet <URL:https://ftp.3gpp.org/tsg_ran/WG1_RL1/TSGR1_101-e/Docs/R1-2004572.zip R1-2004572_PUSCH_Remaining issue of PUSCH enhancements for NR URLLC.docx> [retrieved on 20200515]
• MODERATOR (ZTE CORPORATION): "Feature lead summary #2 on support of Type A PUSCH repetitions for Msg3", 3GPP DRAFT; R1-2104101, vol. RAN WG1, 20 April 2021 (2021-04-20), pages 1 - 80, XP051997569
• NOKIA, NOKIA SHANGHAI BELL: "Enhancements for Multi-TRP URLLC schemes", 3GPP DRAFT; R1-2103366, vol. RAN WG1, 6 April 2021 (2021-04-06), pages 1 - 32, XP051993391
• SAMSUNG: "TB processing over multi-slot PUSCH", 3GPP DRAFT; R1-2103252, vol. RAN WG1, 7 April 2021 (2021-04-07), pages 1 - 8, XP052178028

**Description**

**Technical Field**

The present disclosure relates generally to wireless communication systems and, more specifically, the present disclosure relates to determination of available slots for uplink transmission.

**Background Art**

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

WO 2020206083 A1 discloses a method for enhanced PUSCH repetitions includes receiving at least one of a dynamic grant or a configured grant for an uplink transmission, determining a TDRA for repeated transmission of the uplink transmission on a PUSCH, and repeatedly transmitting the uplink transmission based on the TDRA.

US 2020221474 A1 discloses a method for a terminal transmitting a signal in a wireless communication system including receiving a SPS configuration for SPS-based uplink signal repetition; and, on the basis of the SPS configuration, repeatedly transmitting a first SPS uplink signal to the base station.

ASUSTEK: "Remaining issue of PUSCH enhancements for NR URLLC"; R1-2004572-XP052345944; Author: Asustek; Reference: 3GPP TSG RAN WG1 Meeting #101e, discloses PUSCH enhancements by transmitting the PUCCH and the PUSCH repetitions not overlapping with the PUCCH but not transmitting the PUSCH repetitions overlapping with the PUCCH in the overlapping slots in case that a UE would transmit a PUCCH over a first number of slots and transmit PUSCH repetitions over one or more slots, and the PUCCH transmission would overlap with one or more PUSCH transmission in one or more slots.

**Disclosure of Invention**

**Solution to Problem**

This disclosure relates to determination of available slots for uplink transmission.

In one embodiment, a user equipment (UE) is provided according to appended independent claim 1.

In another embodiment, a base station (BS) is provided according to appended independent claim 3.

In yet another embodiment, a method performed by a UE is provided according to appended independent claim 5. In yet another embodiment, a method performed by a base station is provided according to appended independent claim 7.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

## Brief Description of Drawings

For a more complete understanding of the present disclosure and its advantages, reference is now made to the following description taken in conjunction with the accompanying drawings, in which like reference numerals represent like parts:

FIGURE 1 illustrates an example wireless network according to embodiments of the present disclosure;
FIGURE 2 illustrates an example base station (BS) according to embodiments of the present disclosure;
FIGURE 3 illustrates an example user equipment (UE) according to embodiments of the present disclosure;
FIGURES 4 and 5 illustrate example wireless transmit and receive paths according to embodiments of the present disclosure;
FIGURES 6-8 illustrate example methods for determining a counting of a number of repetitions based on the availability of a slot for physical uplink shared channel (PUSCH) transmission according to embodiments of the present disclosure;
FIGURES 9-11 illustrate example methods for determining available slots for a PUSCH transmission with repetitions and a counting of the number of repetitions according to embodiments of the present disclosure;
FIGURE 12 illustrates an example method for a physical uplink control channel (PUCCH) transmission with hybrid automatic repeat request (HARQ) - acknowledgement (ACK) information corresponding to a semi-persistently scheduled (SPS) physical downlink shared channel (PDSCH) reception according to embodiments of the present disclosure;
FIGURE 13 illustrates an example method for a semi-static configured PUCCH transmission with channel state information (CSI) information according to embodiments of the present disclosure;
FIGURE 14 illustrates an example method for determining available slots of PUSCH transmission with repetitions and a counting of the number of repetitions according to embodiments of the present disclosure;
FIGURES 15 and 16 illustrate example methods for determining a counting of repetitions for PUSCH transmissions according to embodiments of the present disclosure;
FIGURE 17 illustrates an example method for determining a number of repetitions and a counting method of repetitions for PUSCH transmission based on configurations according to embodiments of the present disclosure;
FIGURE 18 illustrates an example method for determining a number of repetitions and a counting method of repetitions for PUSCH transmission based on a configuration and an indication in a downlink control information (DCI) format according to embodiments of the present disclosure;
FIGURES 19 and 20 illustrate example methods for determining a PUSCH transmission with repetitions based on available slots according to embodiments of the present disclosure;
FIGURE 21 illustrates an example method for determining a PUSCH transmission with repetitions based on first information and second information according to embodiments of the present disclosure;
FIGURE 22 illustrates an example method for determining a PUSCH transmission with repetitions based on available slots according to embodiments of the present disclosure;
FIGURE 23 illustrates a structure of a UE according to an embodiment of the disclosure; and
FIGURE 24 illustrates a structure of a base station according to an embodiment of the disclosure.

## Best Mode for Carrying out the Invention

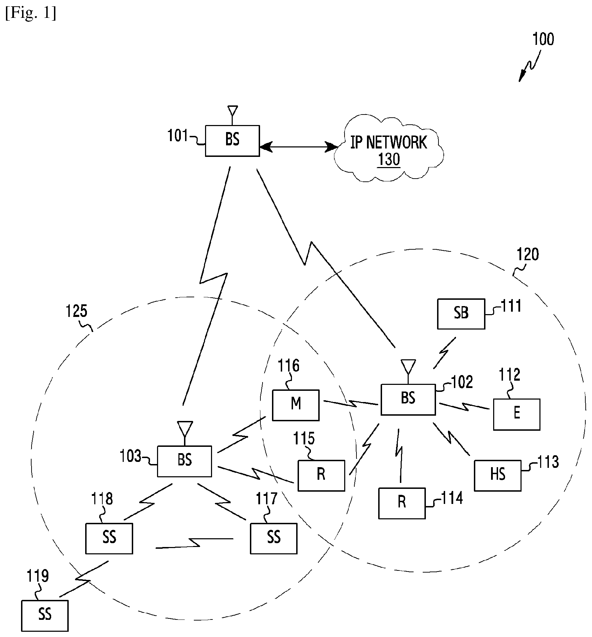

FIGURES 1 through 24, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably-arranged system or device.

The following documents are hereby incorporated by reference into the present disclosure as if fully set forth herein: 3GPP TS 38.211 v16.4.0, "NR; Physical channels and modulation" ("REF1"); 3GPP TS 38.212 v16.4.0, "NR; Multiplexing and channel coding" ("REF2"); 3GPP TS 38.213 v16.4.0, "NR; Physical layer procedures for control" ("REF3"); 3GPP TS 38.214 v16.4.0, "NR; Physical layer procedures for data" ("REF4"); 3GPP TS 38.321 v16.3.0, "NR; Medium Access Control (MAC).protocol specification" ("REF5"); and 3GPP TS 38.331 v16.3.1, "NR; Radio Resource Control (RRC) protocol specification" ("REF6").

To meet the demand for wireless data traffic having increased since deployment of the fourth generation (4G) communication systems, efforts have been made to develop and deploy an improved 5th generation (5G) or pre-5G/NR communication system. Therefore, the 5G or pre-5G communication system is also called a "beyond 4G network" or a "post long term evolution (LTE) system."

The 5G communication system is considered to be implemented in higher frequency (mmWave) bands, e.g., 28 GHz or 60 GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, coordinated multipoints (CoMP), reception-end interference cancellation and the like.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

Depending on the network type, the term 'base station' (BS) can refer to any component (or collection of components) configured to provide wireless access to a network, such as transmit point (TP), transmit-receive point (TRP), an enhanced base station (eNodeB or eNB), a gNB, a macrocell, a femtocell, a WiFi access point (AP), a satellite, or other wirelessly enabled devices. Base stations may provide wireless access in accordance with one or more wireless communication protocols, e.g., 5G 3GPP New Radio Interface/Access (NR), LTE, LTE advanced (LTE-A), High Speed Packet Access (HSPA), Wi-Fi 802.11a/b/g/n/ac, etc. The terms 'BS,' 'gNB,' and 'TRP' can be used interchangeably in this disclosure to refer to network infrastructure components that provide wireless access to remote terminals. Also, depending on the network type, the term 'user equipment' (UE) can refer to any component such as mobile station, subscriber station, remote terminal, wireless terminal, receive point, vehicle, or user device. For example, a UE could be a mobile telephone, a smartphone, a monitoring device, an alarm device, a fleet management device, an asset tracking device, an automobile, a desktop computer, an entertainment device, an infotainment device, a vending machine, an electricity meter, a water meter, a gas meter, a security device, a sensor device, an appliance, and the like. For the sake of convenience, the terms "user equipment" and "UE" are used in this patent document to refer to remote wireless equipment that wirelessly accesses an gNB, whether the UE is a mobile device (such as a mobile telephone or smartphone) or is normally considered a stationary device (such as a desktop computer or vending machine). The UE may also be a car, a truck, a van, a drone, or any similar machine or a device in such machines.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network 100 according to embodiments of the present disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes various gNodeB (bNG) such a base station, BS 101, a BS 102, and a BS 103. The BS 101 communicates with the BS 102 and the BS 103. The BS 101 also communicates with at least one network 130, such as the Internet, a proprietary Internet Protocol (IP) network, or other data network.

The BS 102 provides wireless broadband access to the network 130 for a first plurality of user equipment's (UEs) within a coverage area 120 of the BS 102. The first plurality of UEs includes a UE 111, which may be located in a small business; a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The BS 103 provides wireless broadband access to the network 130 for a second plurality of UEs within a coverage area 125 of the BS 103. The second plurality of UEs includes the UE 115, the UE 116, the UE 117, and the UE 118. In some embodiments, one or more of the BSs 101-103 may communicate with each other and with the UEs 111-118 using 5G/NR, long term evolution (LTE), long term evolution-advanced (LTE-A), WiMAX, WiFi, or other wireless communication techniques.

In certain embodiments, multiple UEs (such as the UE 117, the UE 118, and the UE 119) may communicate directly with each other through device-2-device communication. In some embodiments, a UE, such as UE 119, is outside the coverage area of the network, but can communicate with other UEs inside the coverage area of the network, such as UE 118, or outside the coverage area of the network.

Dotted lines show the approximate extents of the coverage areas 120 and 125, which are shown as approximately circular for the purposes of illustration and explanation only. It should be clearly understood that the coverage areas associated with BSs, such as the coverage areas 120 and 125, may have other shapes, including irregular shapes, depending upon the configuration of the BSs and variations in the radio environment associated with natural and man-made obstructions.

As described in more detail below, one or more of the UEs 111-119 include circuitry, circuitry, programing, or a combination thereof for determination of available slot for uplink transmission. In certain embodiments, and one or more of the BSs 101-103 includes circuitry, programing, or a combination thereof for determination of available slot for uplink transmission.

Although FIGURE 1 illustrates one example of a wireless network, various changes may be made to FIGURE 1. For example, the wireless network could include any number of BSs and any number of UEs in any suitable arrangement. Also, the BS 101 could communicate directly with any number of UEs and provide those UEs with wireless broadband access to the network 130. Similarly, each BS 102-103 could communicate directly with the network 130 and provide UEs with direct wireless broadband access to the network 130. Further, the BSs 101, 102, and/or 103 could provide access to other or additional external networks, such as external telephone networks or other types of data networks.

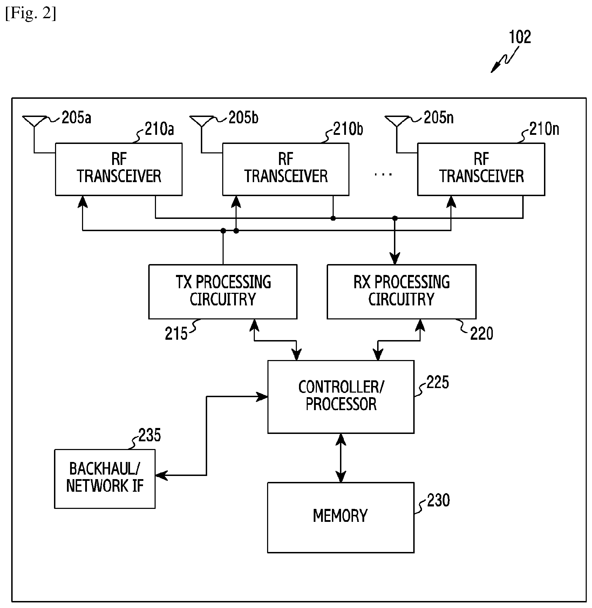

FIGURE 2 illustrates an example BS 102 according to embodiments of the present disclosure. The embodiment of the BS 102 illustrated in FIGURE 2 is for illustration only, and the BSs 101 and 103 of FIGURE 1 could have the same or similar configuration. However, BSs come in a wide variety of configurations, and FIGURE 2 does not limit the scope of this disclosure to any particular implementation of a BS.

As shown in FIGURE 2, the BS 102 includes multiple antennas 205a-205n, multiple radio frequency (RF) transceivers 210a-210n, transmit (TX) processing circuitry 215, and receive (RX) processing circuitry 220. The BS 102 also includes a controller/processor 225, a memory 230, and a backhaul or network interface 235.

The RF transceivers 210a-210n receive, from the antennas 205a-205n, incoming RF signals, such as signals transmitted by UEs in the wireless network 100. The RF transceivers 210a-210n down-convert the incoming RF signals to generate intermediate frequency (IF) or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the BS 102. For example, the controller/processor 225 could control the reception of uplink channel signals and the transmission of downlink channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support determination of available slot for uplink transmission. Any of a wide variety of other functions could be supported in the BS 102 by the controller/processor 225. In some embodiments, the controller/processor 225 includes at least one microprocessor or microcontroller.

The controller/processor 225 is also capable of executing programs and other processes resident in the memory 230, such as an OS. The controller/processor 225 can move data into or out of the memory 230 as required by an executing process. In certain embodiments, the controller/processor 225 supports communication between entities, such as web real time communications (RTC). For example, the controller/processor 225 can move data into or out of the memory 230 according to a process that is being executed.

The controller/processor 225 is also coupled to the backhaul or network interface 235. The backhaul or network interface 235 allows the BS 102 to communicate with other devices or systems over a backhaul connection or over a network. The network interface 235 could support communications over any suitable wired or wireless connection(s). For example, when the BS 102 is implemented as part of a cellular communication system (such as one supporting 5G/NR, LTE, or LTE-A), the network interface 235 could allow the BS 102 to communicate with other BSs over a wired or wireless backhaul connection. When the BS 102 is implemented as an access point, the network interface 235 could allow the BS 102 to communicate over a wired or wireless local area network or over a wired or wireless connection to a larger network (such as the Internet). The network interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

As described in more detail below, the transmit and receive paths of the BS 102 (implemented using the RF transceivers 210a-210n, TX processing circuitry 275, and/or RX processing circuitry 270) support communication with aggregation of frequency division duplex (FDD) cells and time division duplex (TDD) cells.

Although FIGURE 2 illustrates one example of BS 102, various changes may be made to FIGURE 2. For example, the BS 102 could include any number of each component shown in FIGURE 2. As a particular example, an access point could include a number of network interfaces 235, and the controller/processor 225 could support routing functions to route data between different network addresses. As another particular example, while shown as including a single instance of TX processing circuitry 215 and a single instance of RX processing circuitry 220, the BS 102 could include multiple instances of each (such as one per RF transceiver). Also, various components in FIGURE 2 could be combined, further subdivided, or omitted and additional components could be added according to particular needs.

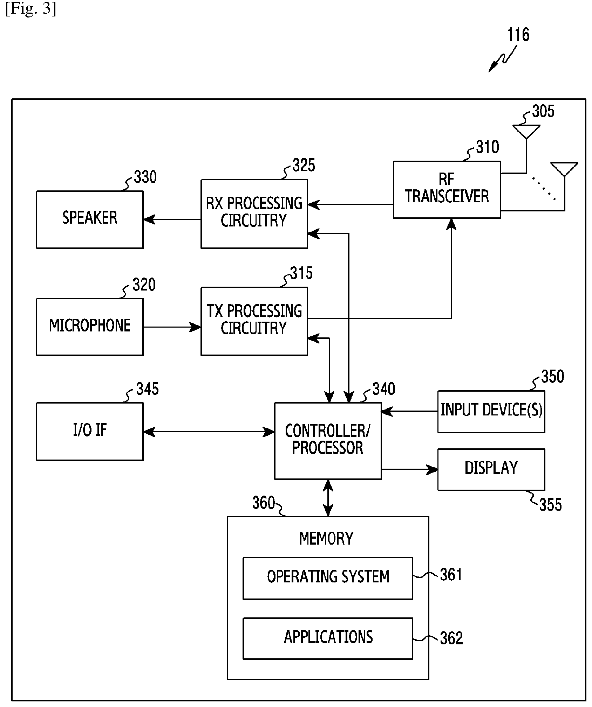

FIGURE 3 illustrates an example UE 116 according to embodiments of the present disclosure. The embodiment of the UE 116 illustrated in FIGURE 3 is for illustration only, and the UEs 111-115 and 117-119 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a RF transceiver 310, TX processing circuitry 315, a microphone 320, and receive (RX) processing circuitry 325. The UE 116 also includes a speaker 330, a processor 340, an input/output (I/O) interface 345, an input device 350, a display 355, and a memory 360. The memory 360 includes an operating system (OS) 361 and one or more applications 362.

The RF transceiver 310 receives, from the antenna 305, an incoming RF signal transmitted by a BS of the wireless network 100. The RF transceiver 310 downconverts the incoming RF signal to generate an IF or baseband signal. The IF or baseband signal is sent to the RX processing circuitry 325 that generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of uplink channel signals and the transmission of downlink channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for beam management. The processor 340 can move data into or out of the memory 360 as required by an executing process. In some embodiments, the processor 340 is configured to execute the applications 362 based on the OS 361 or in response to signals received from BSs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input device 350. The operator of the UE 116 can use the input device 350 to enter data into the UE 116. The input device 350 can be a keyboard, touchscreen, mouse, track ball, voice input, or other device capable of acting as a user interface to allow a user in interact with the UE 116. For example, the input device 350 can include voice recognition processing, thereby allowing a user to input a voice command. In another example, the input device 350 can include a touch panel, a (digital) pen sensor, a key, or an ultrasonic input device. The touch panel can recognize, for example, a touch input in at least one scheme, such as a capacitive scheme, a pressure sensitive scheme, an infrared scheme, or an ultrasonic scheme.

The processor 340 is also coupled to the display 355. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

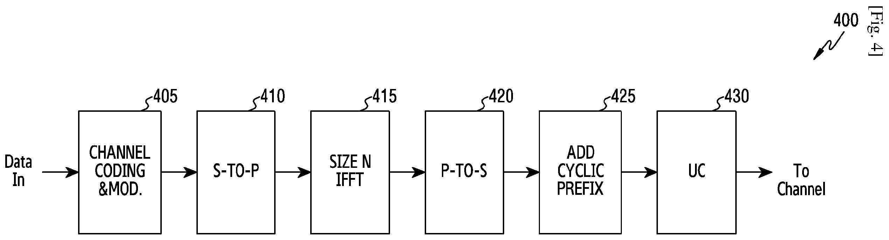

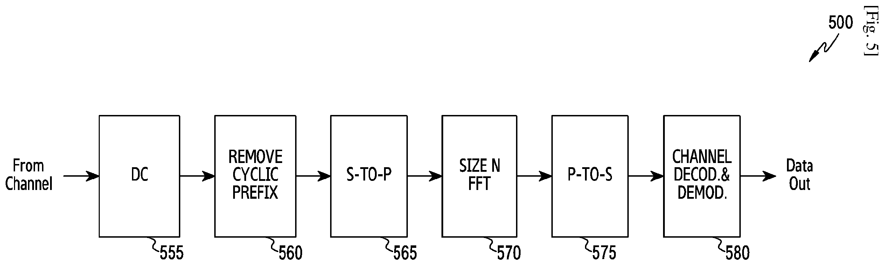

FIGURE 4 and FIGURE 5 illustrate example wireless transmit and receive paths according to this disclosure. In the following description, a transmit path 400, of FIGURE 4, may be described as being implemented in a BS (such as the BS 102), while a receive path 500, of FIGURE 5, may be described as being implemented in a UE (such as a UE 116). However, it may be understood that the receive path 500 can be implemented in a BS and that the transmit path 400 can be implemented in a UE. In some embodiments, the receive path 500 is configured to support determination of available slot for uplink transmission as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols. The serial-to-parallel block 410 converts (such as de-multiplexes) the serial modulated symbols to parallel data in order to generate N parallel symbol streams, where N is the IFFT/FFT size used in the BS 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the BS 102 arrives at the UE 116 after passing through the wireless channel, and reverse operations to those at the BS 102 are performed at the UE 116.

As illustrated in FIGURE 5, the down-converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the BSs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-118. Similarly, each of UEs 111-118 may implement the transmit path 400 for transmitting in the uplink to the BSs 101-103 and may implement the receive path 500 for receiving in the downlink from the BSs 101-103.

Furthermore, each of UEs 111-119 may implement a transmit path 400 for transmitting in the sidelink to another one of UEs 111-119 and may implement a receive path 500 for receiving in the sidelink from another one of UEs 111-119.

Each of the components in FIGURE 4 and FIGURE 5 can be implemented using hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

In certain embodiments, uplink (UL) signals also include data signals conveying information content, control signals conveying UL control information (UCI), demodulation reference signal (DM-RS) associated with data or UCI demodulation, phase-tracking reference signal (PT-RS) used for phase tracking in symbols of a physical uplink control channel (PUSCH), and sounding reference signal (SRS) enabling a gNB (such as the BS 102) to perform UL channel measurement, and a random access (RA) preamble enabling a UE to perform random access (see also REF1). A UE transmits data information or UCI through a respective PUSCH or a physical UL control channel (PUCCH). A PUSCH or a PUCCH can be transmitted over a variable number of symbols in a slot including one symbol. When a UE simultaneously transmits data information and UCI, the UE can multiplex both in a PUSCH or, depending on a UE capability, transmit both a PUSCH with data information and a PUCCH with UCI at least when the transmissions are on different cells.

Certain UL reference signal (RS) includes DM-RS, PT-RS, and SRS. DM-RS is typically transmitted within a bandwidth (BW) of a respective PUSCH or PUCCH. A gNB (such as the BS 102) can use a DM-RS to demodulate information in a respective PUSCH or PUCCH. SRS is transmitted by a UE (such as the UE 116) to provide a gNB (such as the BS 102) with an UL channel state information (CSI) and, for a TDD system, to also provide a precoding matrix indicator (PMI) for downlink (DL) transmission. Further, as part of a random access procedure or for other purposes, a UE can transmit a physical random access channel (PRACH).

UCI can include hybrid automatic repeat request (HARQ) - acknowledgement (ACK) information, indicating correct or incorrect decoding of transport blocks (TBs) or of code block groups (CBGs) in a physical downlink shared channel (PDSCH), scheduling request (SR) indicating whether a UE has data in its buffer to transmit, and CSI reports enabling a gNB to select appropriate parameters for PDSCH/TB or physical downlink control channel (PDCCH) / DCI format transmissions to a UE. A UE (such as the UE 116) transmits a PUCCH on a primary cell of a cell group. HARQ-ACK information is either a positive ACK when a TB decoding is correct or a negative acknowledgement (NACK) when a TB decoding is incorrect. An ACK can be represented by a binary '1' value and a NACK can be represented by a binary '0' value.

In certain embodiments, a UE (such as the UE 116) can multiplex UCI in a PUCCH using different formats. A PUCCH transmission using PUCCH formats 0 and 2 is over at most 2 OFDM symbols, while a PUCCH transmission using PUCCH formats 1, 3, or 4 is over from 4 to 14 symbols. PUCCH formats with longer duration (number of symbols) are used for enhanced coverage. When a number of symbols in a slot are not sufficient for coverage, repetitions of a PUCCH transmission can apply to enhance coverage.

In order to improve a reception reliability, a PUCCH transmission can be repeated over a number of slots. Here a repetition of the PUCCH transmission in each slot starts from a same symbol in the slot and is over a same number of consecutive symbols. When (i) there are not enough available symbols in a slot for a repetition of the PUCCH transmission, (ii) the repetition cannot start from a configured or indicated first symbol, (iii) the repetition cannot occur in consecutive symbols of a slot, then the UE does not transmit the PUCCH repetition in that slot. In such scenarios, either the UCI reception reliability is degraded when the UE does not transmit all configured repetitions of a PUCCH transmission or, when the UE postpones to a next slot a repetition of a PUCCH transmission that the UE cannot transmit in a current slot, the completion of the PUCCH transmission with repetitions requires a longer time, thereby causing a longer latency. Also, an efficiency of UL resource allocation can be affected because some symbols that are available for UL transmission in a slot may not be used for a repetition of the PUCCH transmission due to the aforementioned reasons. It is also possible that there are enough available symbols for more than one repetition of a PUCCH transmission in a slot but the UE is restricted to transmit only one repetition of a PUCCH transmission per slot.

In order to improve a reception reliability, a UE (such as the UE 116) can transmit a PUSCH over a number of time units corresponding to a number of repetitions. A PUSCH can be transmitted with Type A or Type B repetitions. For PUSCH repetition Type A, a UE determines a starting symbol S relative to the start of a slot and a number of consecutive symbols $L$ for a repetition of a PUSCH transmission from the start and length indicator value, $SLIV$, of an indexed row of a time domain resource allocation (TDRA) table. A UE determines a number of repetitions K from the row of the TDRA table or from a higher layer parameter, and repeats the PUSCH transmission across the K consecutive slots by applying a same symbol allocation in each slot. In the following, for brevity, an italicized parameter name refers to a higher layer parameter. The UE transmits a repetition of the PUSCH transmission in a slot only when $L$ consecutive symbols in the slot, starting from symbol S, are not DL symbols. For PUSCH repetition Type B, the starting symbol S relative to the start of the slot, and the number of consecutive symbols $L$ counting from the symbol S allocated for the PUSCH, are provided by *startSymbol* and *length* of the indexed row of the resource allocation table, respectively. The number of nominal repetitions is given by *numberofrepetitions*.

When a UE (such as the UE 116) is provided an UL-DL TDD configuration over a number of slots, is configured for PUSCH transmission with repetition Type A, and is scheduled by a DCI format to transmit the PUSCH over a number of slots *n*, the UE transmits a first PUSCH repetition over a first slot that is available for the PUSCH transmission, a second PUSCH repetitions over a next slot available for the PUSCH transmission, and so on. The UE transmits the PUSCH with repetitions until the n-th slot after the first slot. The total number of PUSCH repetitions can be less than the value *n* when any of the *n* consecutive slots is not available for the PUSCH transmission. A slot is determined as unavailable for the PUSCH transmission when it does not include a number of consecutive UL symbols for a PUSCH transmission starting from a first symbol as indicated by the *SLIV* provided by the DCI format.

The terminology of available slot is used throughout this disclosure to indicate a slot that is available for UL transmission of a PUSCH or a PUCCH, wherein the actual transmission of the PUSCH or PUCCH may or may not occur. For example, a slot is available for a first PUSCH transmission based on an UL-DL TDD configuration and a higher priority second uplink transmission is scheduled in that same slot overlapping with the first PUSCH transmission. In this case the UE does not transmit the first PUSCH in the available slot and the counting of repetitions for the first PUSCH transmission may or may not be incremented depending on a configuration and/or on a transmission priority between the first PUSCH transmission and the second uplink transmission, wherein the priority can be based at least on whether the transmission is dynamically scheduled or semi-statically configured, and/or whether the channel is a PUSCH or a PUCCH, and/or whether a UCI is multiplexed in the PUSCH, and/or UCI type and/or priority that is multiplexed in the PUSCH, and/or a HARQ-ACK priority that is multiplexed in the PUSCH.

When a UE (such as the UE 116) is configured for PUSCH transmission with repetition Type A and is scheduled by a DCI format to transmit the PUSCH over a number of slots $n$, the UE transmits a first PUSCH repetition over a first slot that is available for the PUSCH transmission, a second PUSCH repetitions over a next slot available for the PUSCH transmission, and so on until a counting of available slots is $n$ wherein the number of transmitted PUSCH repetitions is also $n$, or until the counting of consecutive slots is $n$ wherein the number of transmitted PUSCH repetitions can be less or equal to $n$. A gNB (such as the BS 102) can configure whether the counting of repetitions is based on available slots or on consecutive physical slots. It is also possible that the gNB indicates whether the counting of repetitions is based on available slots or on consecutive physical slots in a DCI format. For example, the gNB can configure a first TDRA table with a number of repetitions that a UE can use when the counting of repetitions is based on available slots, and a second TDRA table with a number of repetitions that a UE can use when the counting of repetitions is based on consecutive physical slots. In another example one TDRA table is configured and the counting of repetitions is indicated in a DCI format.

A symbol of a slot can be unavailable for transmission of a PUSCH repetition (and then the slot is unavailable) due to other DL or UL transmissions in the symbol of the slot. For example, the determination of an unavailable slot can be based on an overlap of a symbol in the slot for a repetition with a symbol corresponding to reception of Synchronization signal (SS) physical broadcast channel (PBCH) blocks in the slot with candidate SS/PBCH block indices indicated to a UE by *ssb-PositionsInBurst* in *SIB1*, or by *ssb-PositionsInBurst* in *ServingCellConfigCommon*. A symbol of a PUSCH or PUSCH transmission can be indicated to the UE by higher layers as flexible and the indicated as DL or flexible (reserved) by a slot format indicator (SFI) in a DCI format 2_0 that the UE detects. In another example, if the UE detects a DCI format indicating to the UE to receive PDSCH or CSI-RS in the set of symbols of the slot, the UE receives PDSCH or CSI-RS in the set of symbols of the slot and does not transmit the repetition of the PUSCH transmission.

When a UE is configured/indicated to transmit a PUSCH with Type-A repetitions or a PUCCH with repetitions, if a symbol of a slot becomes unavailable for a transmission of a PUSCH or PUCCH repetition in the slot, the UE does not transmit the repetition. The unavailability of a symbol can be due to another transmission in the symbol or due to a reception in the symbol and the repetition that is not transmitted may or may not be counted towards a total number of repetitions for the PUSCH or PUCCH transmission. Accordingly, embodiments of the present disclosure take into consideration that there is a need to determine a slot availability and a counting of repetitions for a PUSCH or PUCCH transmission with repetitions based on an overlap of symbols for a repetition with other transmissions.

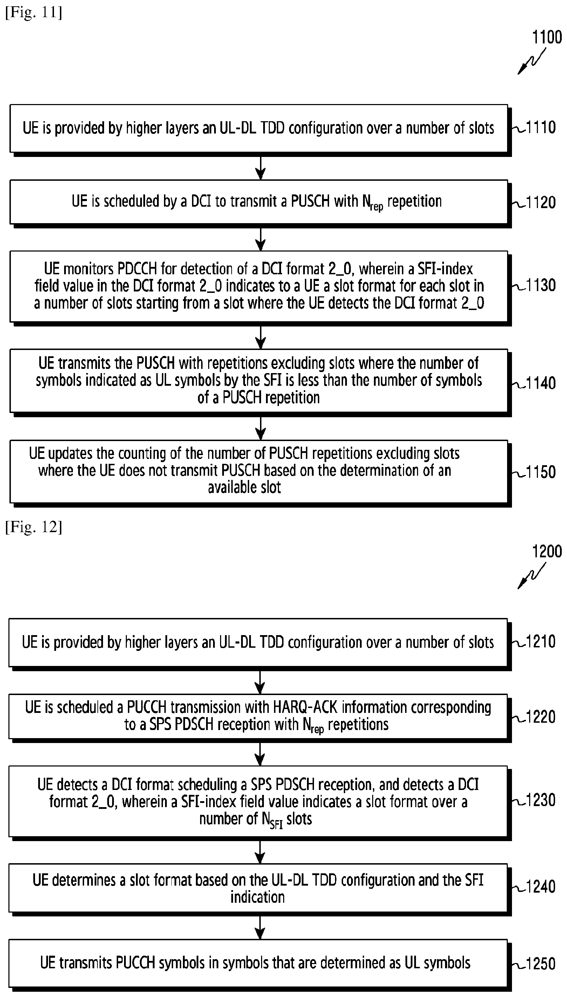

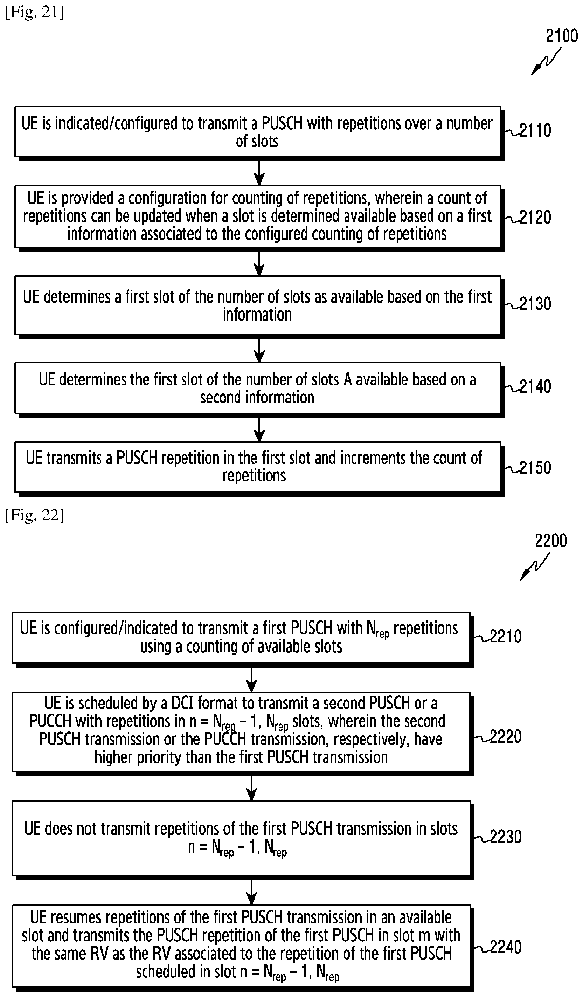

Embodiments of the present disclosure relate to uplink transmissions with repetitions. Embodiments of the present disclosure also relate to determining an availability of a slot for repetition of a physical uplink shared channel (PUSCH) transmission based on overlapping with other transmissions. Embodiments of the present disclosure further relate to determining a counting of repetitions for a PUSCH transmission when a slot is unavailable for a repetition of the PUSCH transmission. Additionally, embodiments of the present disclosure relate to determining an available slot and a counting repetitions for a first PUSCH transmission when a gNB (such as a BS 102) schedules a second uplink transmission to implicitly indicate acknowledgment of a first uplink transmission. Embodiments of the present disclosure also relate to determining a counting of repetitions for a PUSCH transmission when a repetition is canceled by an indication from a downlink control information (DCI) format. Embodiments of the present disclosure further relate to determining a counting of repetitions for a PUSCH transmission based on available slots when a slot format is indicated by a DCI format (such as described in FIGURES 11-14, below). Additionally, embodiments of the present disclosure relate to determining a redundancy version (RV) value for transmission in a slot after a transmission gap (such as described in FIGURE 22, below).

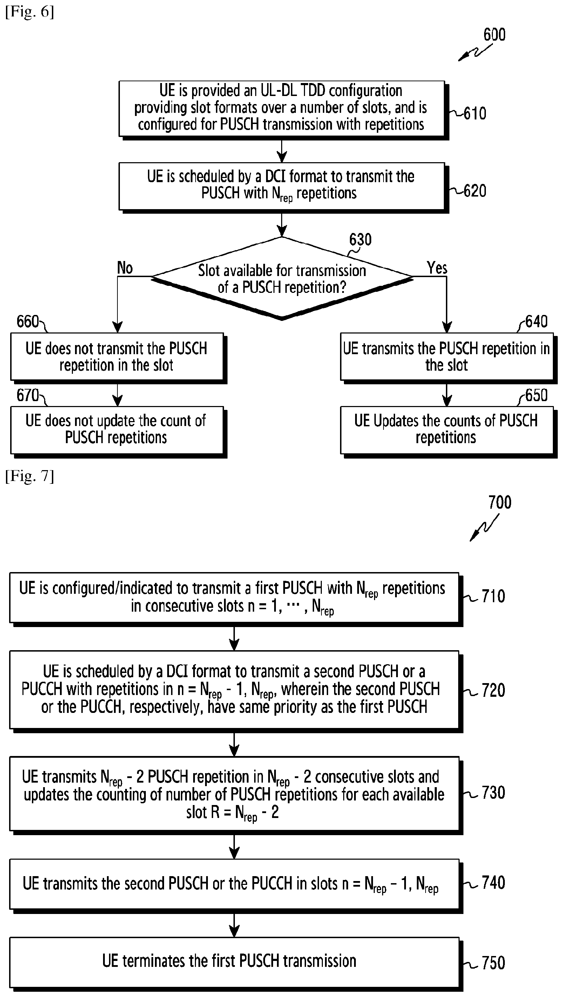

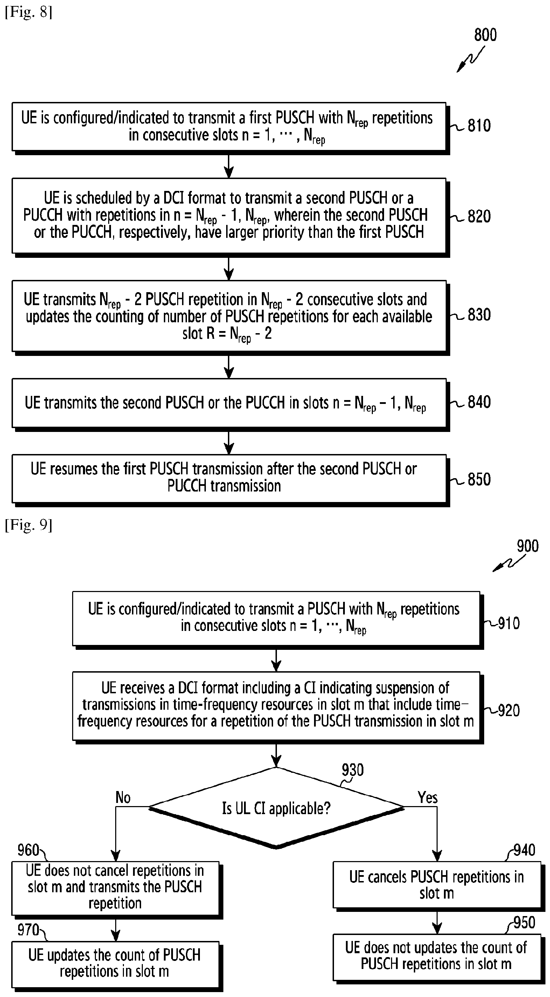

Embodiments of the present disclosure describe determining an availability of a slot for repetition of a PUSCH transmission a counting of repetitions for a PUSCH transmission when a slot is unavailable for a repetition of the PUSCH transmission. This is described in the following examples and embodiments, such as those of FIGURES 6 and 7. Embodiments of the present disclosure describe determining an available slot and a counting of repetitions for a first PUSCH transmission with a gNB (such as the BS 102) schedules a second uplink transmission. This is described in the following examples and embodiments, such as those of FIGURE 8.

FIGURES 6-8 illustrate example methods 600, 700, and 800, respectively, for determining a counting of a number of repetitions based on the availability of a slot for PUSCH transmission according to embodiments of the present disclosure.

The steps of the method 600 of FIGURE 6, method 700 of FIGURE 7, and method 800 of FIGURE 8 can be performed by any of the UEs 111-119 of FIGURE 1, such as the UE 116 of FIGURE 3. The methods 600, 700, and 800 are for illustration only and other embodiments can be used without departing from the scope of the present disclosure.

In certain embodiments, when a UE (such as the UE 116) is configured by higher layers or indicated by a DCI format (configured/indicated) to transmit a PUSCH with $N_{rep}$ repetitions, wherein the PUSCH does not include multiplexed UCI, and is also configured/indicated to transmit a PUCCH with repetitions, the UE does not transmit the PUSCH repetition if any of the corresponding symbols overlaps with the transmission of a PUCCH with repetitions. An overlap of symbols of a PUSCH repetition, resulting in not transmitting the PUSCH repetition, can happen also with a PRACH transmission.

To acknowledge a successful reception of a PUSCH or PUCCH transmission from a UE (such as the UE 116) on a cell, after reception of a number of repetitions smaller than the configured/indicated number of repetitions, a gNB (such as the BS 102) can schedule another PUSCH or PUCCH transmission on the cell prior to the UE transmitting all configured/indicated number of repetitions. For example, when a UE receives a first scheduling grant to transmit a first PUSCH with repetitions over a number of slots and then receives a second scheduling grant to transmit a second PUSCH transmission of same priority in slots from the number of slots, the UE assumes that the first PUSCH transmission was correctly received by the gNB and terminates the first PUSCH transmission. For example, when a UE receives a first scheduling grant to transmit a first PUSCH over a first number of slots and then receives a second scheduling grant to transmit a second PUSCH of larger priority over second slots from the first number of slots, the UE does not transmit the first PUSCH over the second slots and resumes transmission of the repetitions of the first PUSCH after the second slots.

When the UE can transmit one PUSCH repetition per slot, and the gNB schedules (i) a first PUSCH transmission with $N_{rep1}$ repetitions in $n = 1, ..., N_{rep1}$ consecutive slots, and (ii) a second PUSCH transmission with $N_{rep2}$ repetitions (it is noted that $N_{rep2}$ can be same as or different from $N_{rep1}$), starting from a slot where a repetition of the first scheduled PUSCH transmission is scheduled, e.g. in slot $n = N_{rep1} - 1$. The UE does not transmit repetitions of the first PUSCH transmission in slots $n = N_{rep1} - 1$ and $n = N_{rep1}$. It is also possible that a gNB schedules a PUCCH transmission with repetitions in slots where a PUSCH repetition is also scheduled, for example after successful reception of the PUSCH over a smaller number of slots than the number of scheduled slots. Then, the UE does not transmit the PUSCH in the slots where the PUCCH is scheduled, terminates the PUSCH transmission, and transmits the PUCCH.

When a gNB (such as the BS 102) schedules a PUSCH transmission with repetitions, and a slot is unavailable for transmission of a PUSCH repetition due to transmission in symbols of the slot overlapping with another transmission of larger priority, the repetition is not counted in the number of repetitions. In order to transmit the PUSCH with the $N_{rep}$ configured/indicated repetitions, additional available slots can be used so that the PUSCH transmission with $N_{rep}$ repetitions spans over a number of consecutive slots larger than $N_{rep}$. Similar, when a repetition of a PUSCH transmission in a slot is canceled by a DCI format providing an uplink cancelation indicator (CI), the repetition is not counted in the number of repetitions.

The method 600 as illustrated in FIGURE 6 describes an example procedure for a UE to determine a counting of a number of repetitions based on the availability of a slot for PUSCH transmission according to the disclosure.

In step 610, a UE (such as the UE 116) is provided an UL-DL TDD configuration providing slot formats over a number of slots, and is configured for PUSCH transmission with repetitions. In step 620, the UE is scheduled by a DCI format to transmit the PUSCH with $N_{rep}$ repetitions. In step 630, the UE determines whether a slot is available or unavailable for transmission of a PUSCH repetition. When the slot is available for transmission of the PUSCH repetition (as determined in step 630), the UE in step 640 transmits the PUSCH repetition in the slot. In step 650, the UE updates the counting of repetitions.

When the slot is not available for transmission of the PUSCH repetition (as determined in step 630), the UE in step 660 does not transmit the PUSCH repetition in the slot. The UE in step 670 does not update the counting of repetitions.

It is noted that the update of the counting of number of repetitions depends on the number of repetitions per slot. If a UE is configured to transmit a PUSCH with repetition type A, the update of the counting of repetitions in available slots is done in increments of 1.

The method 700 as illustrated in FIGURE 5 describes an example procedure for a UE to determine a counting of a number of repetitions based on the availability of a slot for PUSCH transmission when a first and a second transmission have same priority according to the disclosure.

In step 710, a UE (such as the UE 116) is configured/indicated to transmit a first PUSCH with $N_{rep}$ repetitions in consecutive slots $n = 1, ..., N_{rep}$. In step 720, the UE is scheduled by a DCI format to transmit a second PUSCH or a PUCCH with repetitions in slots $n = N_{rep} - 1$, $N_{rep}$. It is noted that the second PUSCH or the PUCCH, respectively, have same priority as the first PUSCH. In step 730, the E transmits $N_{rep} - 2$ PUSCH repetitions in $N_{rep} - 2$ consecutive slots and updates the counting of number of PUSCH repetitions for each available slot R = $N_{rep} - 2$. In step 740, the UE transmits the second PUSCH or the PUCCH in slots $n = N_{rep} - 1$, $N_{rep}$. In step 750, the UE terminates the first PUSCH transmission.

It is noted that when the second PUSCH or PUCCH, respectively, have larger priority that the first PUSCH, the UE resumes the first PUSCH transmission after the second PUSCH or PUCCH transmission. When the second PUCCH is without repetitions, the UE multiplexes UCI in an overlapping repetition of the first PUSCH, transmits the PUSCH repetition, and does not transmit the PUCCH.

The method 800 as illustrated in FIGURE 8 describes an example procedure for a UE to determine a counting of a number of repetitions based on the availability of a slot for PUSCH transmission when a second transmission has larger priority than a first transmission according to the disclosure.

In step 810, a UE (such as the UE 116) is configured/indicated to transmit a first PUSCH with $N_{rep}$ repetitions in consecutive slots $n = 1, ..., N_{rep}$. In step 820, the UE is scheduled by a DCI format, or is configured by higher layers, to transmit a second PUSCH or a PUCCH with repetitions in slots $n = N_{rep} - 1$, $N_{rep}$. It is noted that the second PUSCH or the PUCCH, respectively, has larger priority than the first PUSCH. In step 830, the E transmits $N_{rep} - 2$ PUSCH repetitions in $N_{rep} - 2$ consecutive slots and updates the counting of number of PUSCH repetitions for each available slot R = $N_{rep} - 2$. In step 840, the UE transmits the second PUSCH or the PUCCH in slots $n = N_{rep} - 1$, $N_{rep}$. In step 850, the UE resumes the first PUSCH transmission after the second PUSCH or PUCCH transmission.

Although FIGURE 6 illustrates the method 600, FIGURE 7 illustrates the method 700, and FIGURE 8 illustrates the method 800 various changes may be made to FIGURES 6, 7, and 8. For example, while the methods 600-800 are shown as a series of steps, various steps could overlap, occur in parallel, occur in a different order, or occur multiple times. In another example, steps may be omitted or replaced by other steps. For example, steps of the method 600, the method 700, and the method 800 can be executed in a different order.

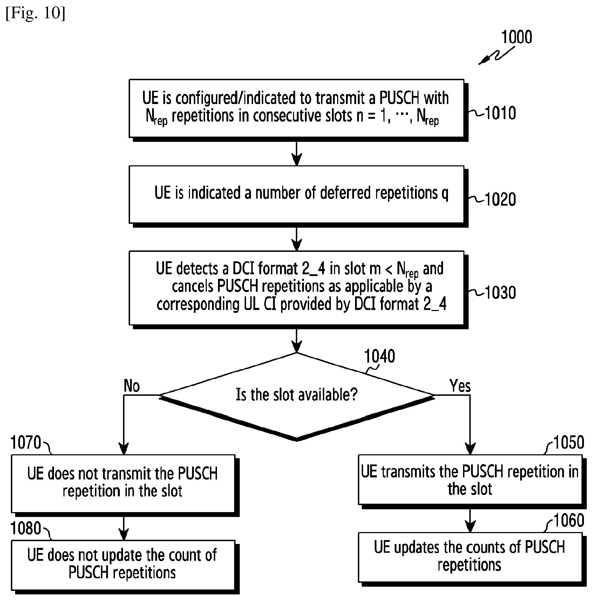

Embodiments of the present disclosure describe determining a counting of repetitions for a PUSCH transmission based on an uplink CI. This is described in the following examples and embodiments, such as those of FIGURES 9 and 10. Embodiments of the present disclosure also describe determining a counting of repetitions for a PUSCH transmission based on available slots when a slot format is indicated by a DCI format. This is described in the following examples and embodiments, such as those of FIGURES 11-14.

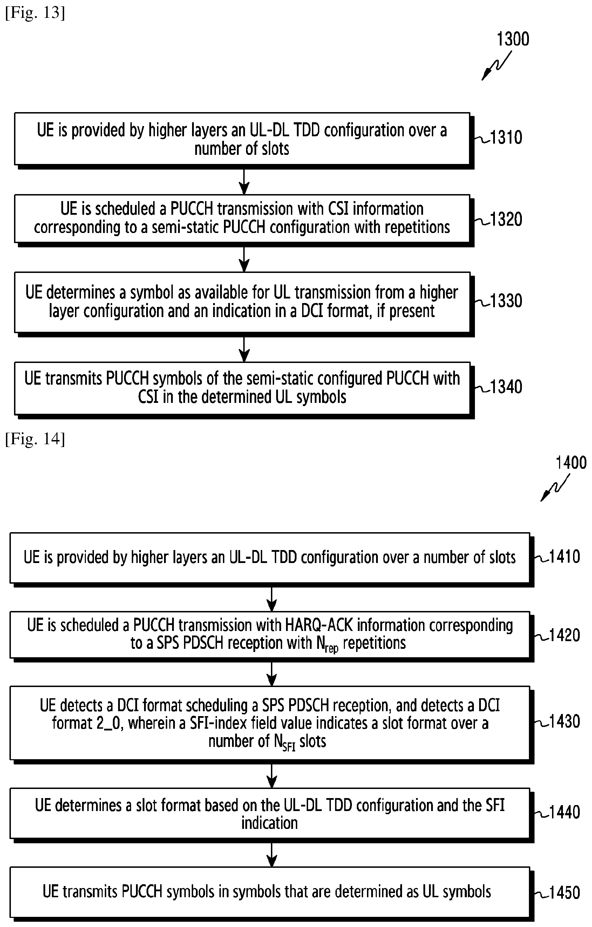

FIGURES 9-11 illustrate example methods 900, 1000, and 1100, respectively, for determining available slots for a PUSCH transmission with repetitions and a counting of the number of repetitions according to embodiments of the present disclosure. FIGURE 12 illustrates an example method 1200 for a PUCCH transmission with HARQ-ACK information corresponding to a semi-persistently scheduled (SPS) PDSCH reception according to embodiments of the present disclosure. FIGURE 13 illustrates an example method 1300 for a semi-static configured PUCCH transmission with CSI information according to embodiments of the present disclosure. FIGURE 14 illustrates an example method 1400 for determining available slots of PUSCH transmission with repetitions and a counting of the number of repetitions according to embodiments of the present disclosure.

The steps of the method 900 of FIGURE 9, the method 1000 of FIGURE 10, the method 1100 of FIGURE 11, the method 1200 of FIGURE 12, the method 1300 of FIGURE 13, and the method 1400 of FIGURE 14 can be performed by any of the UEs 111-119 of FIGURE 1, such as the UE 116 of FIGURE 3. The methods 900-1400 are for illustration only and other embodiments can be used without departing from the scope of the present disclosure.

In certain embodiments, a determination of an available slot for a PUSCH transmission can be based on an uplink CI provided by a DCI format. When a UE is configured/indicated to transmit a PUSCH with repetitions and detects a DCI format 2_4 including a CI that indicates cancelation of transmissions in time-frequency resources of a slot on a cell that include at least one symbol and at least one resource block (RB) of the PUSCH transmission in the slot on the cell, and the UL CI is applicable for the priority of the PUSCH transmission, the UE cancels the PUSCH repetition in the slot. For example, if a UE is scheduled to transmit a PUSCH with $N_{rep}$ Type A repetitions in consecutive slots $n = 1, ..., N_{rep}$, and receives a DCI format that includes an UL CI indicating suspension of transmissions in time-frequency resources in slot m that include time-frequency resources for a repetition of the PUSCH transmission in slot m and the UL CI is applicable for the priority of the PUSCH transmission, the UE cancels the repetitions in slot m (subject to cancelation timelines being fulfilled), and resumes the repetitions after slot m without counting slot m in the number of slots allocated for repetitions of the PUSCH transmission. When the UL CI is not applicable for the priority of the PUSCH transmission, the UE does not cancel the repetitions in the slot despite the repetition including time-frequency resources that are indicated by the UL CI for cancelation of transmissions in the slot.

The method 900, as illustrated in FIGURE 9 describes an example for a UE to determine available slots for a PUSCH transmission with repetitions and a counting of the number of repetitions according to the disclosure.

In step 910, a UE (such as the UE 116) is configured/indicated to transmit a PUSCH with $N_{rep}$ repetitions in consecutive slots $n = 1, ..., N_{rep}$. In step 920, the UE receives a DCI format including a CI indicating suspension of transmissions in time-frequency resources in slot m that include time-frequency resources for a repetition of the PUSCH transmission in slot m. In step 930, the UE determines whether the UL CI is applicable for the priority of the PUSCH transmission (and for the cancelation timelines). When the UL CI is applicable for the priority of the PUSCH transmission (as determined in step 930), the UE in step 940 cancels the repetitions in slot m. Then in step 950, the UE does not update the count of repetitions in slot *m.*

When the UL CI is not applicable for the priority of the PUSCH transmission(as determined in step 930), the UE in step 960 does not cancel repetitions in slot m and transmits the PUSCH repetition. Then in step 970, the UE updates the count of PUSCH repetitions in slot m.

PUSCH repetitions that are canceled by an UL CI can be deferred to subsequent available slots and the UE can resume transmission of the canceled PUSCH repetitions in the available slots after cancelation. A gNB can limit the number of repetitions that are deferred for transmission in available slots after the slots with canceled repetitions. For example, when a UE is configured/indicated to transmit a PUSCH with $N_{rep}$ type A repetitions in consecutive slots $n = 1, ..., N_{rep}$, and to defer transmission of only one repetition if cancelation of any of the scheduled repetitions occur, if the UE receives a DCI format including CI in any slot $n$, the UE defers transmission of one PUSCH repetition in an available slot after the canceled slot(s).

The method 1000 as illustrated in FIGURE 10 describes an example for a UE to determine available slots for a PUSCH transmission with repetitions and a counting of the number of repetitions according to the disclosure.

In step 1010, a UE (such as the UE 116) is configured/indicated to transmit a PUSCH with $N_{rep}$ repetitions in consecutive slots $n = 1, ..., N_{rep}$. In step 1020, the UE is indicated a number of deferred repetitions $q$. In step 1030, the UE detects a DCI format 2_4 in slot $m < N_{rep}$ and cancels PUSCH repetitions as applicable by a corresponding UL CI provided by DCI format 2_4. In step 1040, the UE determines whether a slot is available or unavailable for transmission of the PUSCH repetition. When the slot is available for transmission of the PUSCH repetition (as determined in step 1040), the UE in step 1050 transmits the PUSCH repetition in the slot. Thereafter the UE in step 1060 updates the counting of repetitions.

When the slot is not available for transmission of the PUSCH repetition (as determined in step 1040), the UE in step 1070 does not transmit the PUSCH repetition in the. In step 1070, the UE does not update the counting of repetitions 880. The UE determines the availability of subsequent slots until the counting reaches the values of

$m + q.$

A determination of an available slot for PUSCH transmission can be based on an UL-DL TDD configuration provided by higher layers and possibly adapted by a DCI format 2_0 providing an SFI-index. An SFI-index field value in the DCI format 2_0 indicates to a UE a slot format for each slot in a number of slots $N_{SFI}$ starting from a slot where the UE detects the DCI format 2_0. A symbol configured as a flexible by a higher layer configuration can be indicated as an UL symbol by a DCI format, and can be used for a semi-static UL transmission wherein the transmission can be with repetitions. It is also possible that a flexible configured symbol by a higher layer configuration can be indicated as a DL symbol by a DCI format and is not available for UL transmission.

A possible adaptation of an UL-DL slot format by a DCI format can result in not transmitting one or more PUSCH repetitions in a slot that was previously identified by an RRC configuration as available or can result in transmitting one or more PUSCH repetitions in a slot that was not previously identified by an RRC configuration as available. The possible adaptation of an UL-DL slot format by a DCI format 2_0 providing an SFI-index can determine whether or not an uplink channel is transmitted in a slot, wherein the uplink channel can be a PUSCH transmission configured by *ConfiguredGrantConfig,* a PUSCH transmission scheduled by DCI format 0_1 or corresponding to a Type 2 configured grant activated by DCI format 0_1, a PUSCH transmission scheduled by DCI format 0_2 or corresponding to a Type 2 configured grant activated by DCI format 0_2, a PUSCH repetition Type A transmission, or a PUSCH repetition Type B transmission. The uplink channel can also be a PUCCH transmission with HARQ-ACK information corresponding to a DCI format detected by the UE that schedules a SPS PDSCH reception, or schedules a SPS PDSCH release, or indicates SCell dormancy through a PDCCH reception, or requests Type-3 HARQ-ACK codebook report, a PUCCH transmission with SR, or a PUCCH transmission with CSI. A PUCCH transmission can be with repetitions, wherein the UE can be configured a number of slots, $N_{PUCCH}^{repeat}$, for repetitions of the PUCCH transmission, or can be configured a number of repetitions in a PUCCH Resource Indicator (PRI) field.

In one example, a UE (such as the UE 116) is configured for a PUCCH transmission with repetitions with HARQ-ACK information corresponding to a SPS PDSCH reception or a SPS PDSCH release and monitors PDCCH for detection of a DCI format indicating a slot structure, such as a DCI format 2_0. Based upon a detection of the DCI format, the UE can determine a modification to a slot structure over a number of slots, relative to a slot structure the UE was previously indicated by higher layers. A symbol indicated by a higher layer configuration as a flexible symbol can be indicate as UL symbol by the detected DCI format and used to transmit a PUCCH symbol of a PUCCH transmission with HARQ-ACK information corresponding to a SPS PDSCH reception or a SPS PDSCH release. In another example a symbol that is configured as a flexible symbol by higher layer and indicated as UL symbol by a DCI format can be used for a PUCCH transmission that is semi-statically configured, wherein the PUCCH transmission is with SR, or with CSI. In yet another example the uplink transmission is for a PUSCH transmission that is semi-statically configured with semi-persistent CSI report and is configured with repetitions. It is also possible that the uplink transmission is for Type 1 or Type 2 PUSCH transmission with a configured grant and with repetitions.

The possible adaptation can also depend on whether the indication of an UL-DL slot format by a DCI format 2_0 providing an SFI-index affects only slots that are scheduled for PUSCH transmission with repetition, or affects also one or more slots before the slot where the 1st repetition is transmitted.

For example, when a UE (such as the UE 116) is scheduled for a PUSCH transmission with repetitions and the first repetition is transmitted in slot $n$, if the DCI format that adapts the UL-DL slot format is received in a slot prior to the slot where the 1st PUSCH repetition is scheduled (slot $n$) and affects any of the slots scheduled for PUSCH repetitions, the change in UL-DL slot format as indicated by the received DCI format is effective over a number of slots comprising the slot with PUSCH repetitions and the transmission of PUSCH repetitions and corresponding counting of repetitions can be based on the slots available for uplink transmission according to the UL-DL slot format by RRC configuration and adaptation by the DCI format, or can be based on the slots available for uplink transmission according to the UL-DL slot format by RRC configuration.

For another example, the DCI format that adapts the UL-DL slot format can be received in any of the slots scheduled for PUSCH repetitions, including the slot $n$ where the 1st PUSCH repetition is scheduled. The change in UL-DL slot format as indicated by the received DCI format can be effective starting from the slot where the DCI format is received. It is also possible that the change in UL-DL slot format as indicated by the received DCI format is not effective and the UE ignores a slot format change indication by a DCI format received in a slot after the slot where the first PUSCH repetition is transmitted.

For yet another example, whether a change in UL-DL slot format indicated by a DCI format is effective or not, and whether a corresponding counting of repetitions is affected or not, depends on the relative timing of the reception of the DCI format scheduling the PUSCH repetitions and the reception of the DCI format indicating an adaptation of the UL-DL slot format by RRC signaling.

The method 1100 as illustrated in FIGURED 11 describes an example for a UE to determine available slots for PUSCH transmission with repetitions and a counting of the number of repetitions according to the disclosure.

In step 1110, a UE (such as the UE 116) is provided by higher layers an UL-DL TDD configuration over a number of slots. In step 1120, the UE is scheduled by a DCI format to transmit a PUSCH with $N_{rep}$ repetitions. In step 930, the UE monitors PDCCH for detection of a DCI format 2_0. Here an SFI-index field value in the DCI format 2_0 indicates to a UE a slot format for each slot in a number of slots $N_{SFI}$ starting from a slot where the UE detects the DCI format 2_0. In step 1140, the UE transmits the PUSCH with repetitions excluding slots where the number of symbols indicated as UL symbols by the SFI is less than the number of symbols of a PUSCH repetition. In step 1150, the UE updates the counting of the number of PUSCH repetitions excluding slots where the UE does not transmit PUSCH based on the determination of an available slot.

The method 1200 as illustrated in FIGURE 12 describes an example for a PUCCH transmission with HARQ-ACK information corresponding to a SPS PDSCH reception according to the disclosure.

In step 1210, a UE (such as the UE 116) is provided by higher layers an UL-DL TDD configuration over a number of slots. In step 1220, the UE is scheduled a PUCCH transmission with HARQ-ACK information corresponding to a SPS PDSCH reception with $N_{rep}$ repetitions. In step 1230, the UE detects a DCI format scheduling a SPS PDSCH reception, and detects a DCI format 2_0. Here an SFI-index field value indicates a slot format over a number of $N_{SFI}$ slots. In step 1240, the UE determines a slot format based on the UL-DL TDD configuration and the SFI indication. In step 1250, the UE transmits PUCCH symbols n symbols that are determined as UL symbols.

The method 1300 as illustrated in FIGURE 4, describers an example for a semi-static configured PUCCH transmission with CSI information according to the disclosure.

In step 1310, a UE (such as the UE 116) is provided by higher layers an UL-DL TDD configuration over a number of slots. In step 1320, the UE scheduled a PUCCH transmission with CSI information corresponding to a semi-static PUCCH configuration with repetitions. In step 1330, the UE determines a symbol as available for UL transmission from a higher layer configuration and an indication in a DCI format, if present. In step 1340, the UE transmits PUCCH symbols of the semi-static configured PUCCH with CSI in the determined UL symbols 1.

The method 1400 as illustrated in FIGURE 14 illustrates an example for a UE to determine available slots for PUSCH transmission with repetitions and a counting of the number of repetitions according to the disclosure.

In step 1410, a UE (such as the UE 116) provided by higher layers an UL-DL TDD configuration over a number of slots. In step 1420, the UE receives in slot $n$ a first DCI format that indicates a slot format for each slot in a number of slots $N_s$ starting from a slot where the UE detects the first DCI format and including a slot $p$. In step 1430, the UE receives in slot $m$ a second DCI format that schedules a PUSCH with $N_{rep}$ repetitions starting from a slot $p$ where a first PUSCH repetition is transmitted. In step 1440, the UE transmits the PUSCH with repetitions excluding slots where the number of symbols indicated as UL symbols by the first DCI format is less than the number of symbols of a PUSCH repetition scheduled by the second DCI format. In step 1450, the UE counts the PUSCH repetitions excluding slots where the UE does not transmit PUSCH based on the indication of the first DCI format. Alternatively, the UE in step 1250 can count the PUSCH repetitions based on the indication of the second DCI format.

In reference to the method 1400 that is illustrated in FIGURE 14, a timeline for a first slot where the UE receives a DCI that indicates a slot format and a second slot where the UE receives a DCI that schedules a PUSCH with repetitions can be that the first slot is before the second slot or the first slot is after the second slot, and first and second slots can be consecutive or non-consecutive slots. The timeline of the first and second slot can be associated to a counting of repetitions, wherein the counting of PUSCH repetitions can be based on the determination of a PUSCH transmission occasion by the second DCI format or can be based on the determination by the first DCI of slots identified by a second DCI as PUSCH transmission occasions. The counting of repetitions can be further associated to the timeline of the first slot and the slot where the first PUSCH repetition is transmitted, wherein the indication of a slot format for each slot in a number of slots $N_s$ starts from the first slot where the UE detects the first DCI format.

Although FIGURE 9 illustrates the method 900, FIGURE 10 illustrates the method 1000, FIGURE 11 illustrates the method 1100, FIGURE 12 illustrates the method 1200, FIGURE 13 illustrates the method 1300, and FIGURE 14 illustrates the method 1400, various changes may be made to FIGURES 9-14. For example, while the methods 900-1400 are shown as a series of steps, various steps could overlap, occur in parallel, occur in a different order, or occur multiple times. In another example, steps may be omitted or replaced by other steps. For example, steps of the methods 900-1400 can be executed in a different order.

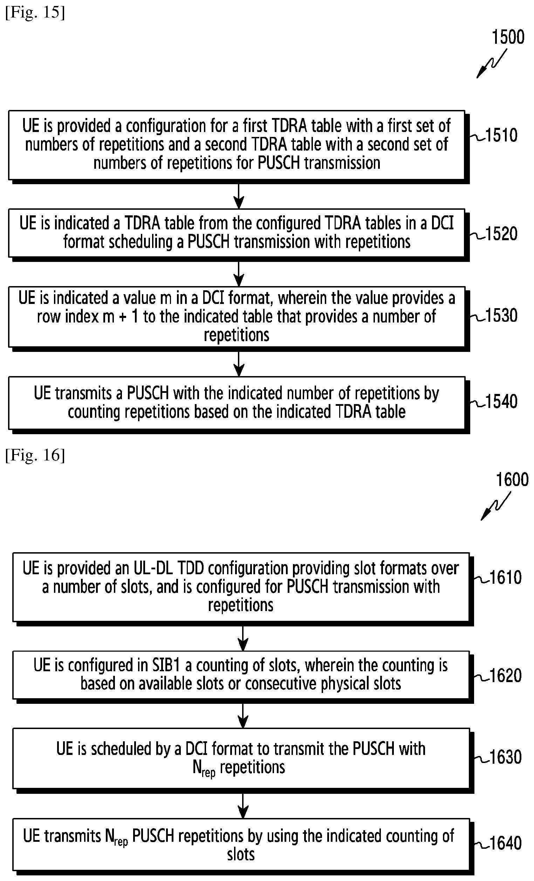

Embodiments of the present disclosure describe signaling for determining a counting of repetitions for a PUSCH transmission. This is described in the following examples and embodiments, such as those of FIGURES 15-18.

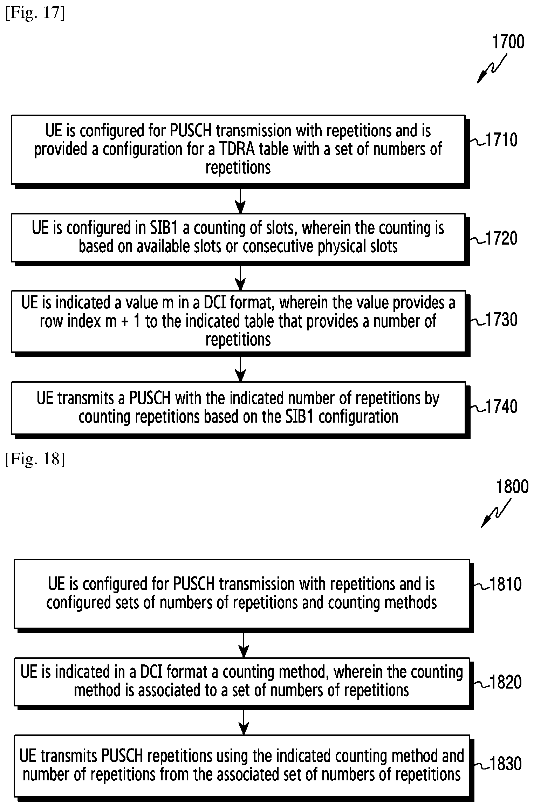

FIGURES 15 and 16 illustrate example methods 1500 and 1600, respectively, for determining a counting of repetitions for PUSCH transmissions according to embodiments of the present disclosure. FIGURE 17 illustrates an example method 1700 for determining a number of repetitions and a counting method of repetitions for PUSCH transmission based on configurations according to embodiments of the present disclosure.

FIGURE 18 illustrates an example method 1800 for determining a number of repetitions and a counting method of repetitions for PUSCH transmission based on a configuration and an indication in a DCI format according to embodiments of the present disclosure.

The steps of the method 1500 of FIGURE 15, the method 1600 of FIGURE 16, the method 1700 of FIGURE 17, and the method 1800 of FIGURE 18 can be performed by any of the UEs 111-119 of FIGURE 1, such as the UE 116 of FIGURE 3. The methods 800 and 900 are for illustration only and other embodiments can be used without departing from the scope of the present disclosure.

In certain embodiments, a counting of repetitions can be based on available slots or on consecutive physical slots. As illustrated in FIGURE 15, a gNB (such as the BS 102) can configure a first TDRA table with a number of repetitions that a UE can use when the number of repetitions is based on a counting of available slots, and a second TDRA table with a number of repetitions that a UE can use when the number of repetitions is based on a counting of consecutive physical slots, and indicate in a DCI format one of the TDRA tables.

A gNB (such as the BS 102) can configure a single TDRA table associated to a counting of repetitions wherein the counting can be based on available slots or on consecutive physical slots. The configuration of the TDRA table implicitly indicates whether the counting of repetitions is based on available slots or on consecutive physical slots.

A gNB (such as the BS 102) can indicate whether a counting of repetitions is based on available slots or on consecutive physical slots in a DCI format wherein a number of repetitions can be indicated in a TDRA table, or by an RRC parameter or by a default value. It is also possible that the indication of the counting procedure is indicated in SIB1, as illustrated in FIGURE 16.

The method 1500, as illustrated in FIGURE 15, describes an example procedure for a UE to determine a counting of repetitions for PUSCH transmission.

In step 1510, a UE (such as the UE 116) is provided a configuration for a first TDRA table with a first set of numbers of repetitions and a second TDRA table with a second set of numbers of repetitions for PUSCH transmission. Here the first table is associated to a counting of consecutive physical slots and the second table is associated to the counting of available slots. In step 1520, the UE is indicated a TDRA table from the configured TDRA tables in a DCI format scheduling a PUSCH transmission with repetitions. In step 1530, the UE is indicated a value m in a DCI format, wherein the value provides a row index $m + 1$ to the indicated table that provides a number of repetitions. In step 1540, the UE transmits a PUSCH with the indicated number of repetitions by counting repetitions based on the indicated TDRA table. Alternatively, the indication at step 1520 can be in the SIB.

The method 1600, as illustrated in FIGURE 16, describes an example procedure for a UE to determine a counting of repetitions for PUSCH transmission.

In step 1610, a UE (such as the UE 116) is provided an UL-DL TDD configuration providing slot formats over a number of slots, and is configured for PUSCH transmission with repetitions. In step 1620, the UE is configured in SIB1 a counting of slots, wherein the counting is based on available slots or consecutive physical slot. In step 1630, the UE is scheduled by a DCI format to transmit the PUSCH with $N_{rep}$ repetitions. In step 1640, the UE transmits $N_{rep}$ PUSCH repetitions by using the indicated counting of slots.

The method 1700 as illustrated in FIGURE 17 describes an example procedure for a UE to determine a number of repetitions and a counting method of repetitions for PUSCH transmission based on configurations.

In step 1710, a UE (such as the UE 116) is configured for PUSCH transmission with repetitions and is provided a configuration for a TDRA table with a set of numbers of repetitions. In step 1720, the UE is configured in SIB1 a counting of slots, wherein the counting is based on available slots or consecutive physical slots. In step 1730, the UE is indicated a value m in a DCI format. Here the value provides a row index $m + 1$ to the indicated table that provides a number of repetitions. In step 1740, the UE transmits a PUSCH with the indicated number of repetitions by counting repetitions based on the SIB1 configuration.

In certain embodiments, a counting method is associated to a set of numbers of repetitions, and a configuration of a set of numbers of repetitions implicitly indicates a counting method. It is also possible that a number of repetitions can be used with more than one counting method. For example, a number of repetitions equal to 16 can be used with a counting of physical slots and with a counting of available slots. This may correspond to two rows in a TDRA table, wherein a row with index $n$ indicates 16 repetitions and counting of physical slots and another row index $p$ indicates 16 repetitions and counting of available slots. Thus, an indication in a DCI format of a row index of a TDRA table indicates a number of repetitions and a counting method. It is also possible that the row index of a TDRA table indicates a number of repetitions for a certain counting method, and an additional DCI signaling indicates to use a different counting method. For example, the TDRA table is associated to a counting of physical slots, and the additional DCI signaling indicates the counting of available slots, wherein the indication by a DCI format is a 1-bit indication that indicates a first or a second counting method.

The method 1800, as illustrated in FIGURE 18, describes an example procedure for a UE to determine a number of repetitions and a counting method of repetitions for PUSCH transmission based on a configuration and an indication in a DCI format.

In step 1810, a UE (such as the UE 116) is configured for PUSCH transmission with repetitions and is configured sets of numbers of repetitions and counting methods. In step 1820, the UE is indicated in a DCI format a counting method. The counting method can be associated to a set of numbers of repetitions. In step 1830, the UE transmits PUSCH repetitions using the indicated counting method and number of repetitions from the associated set of numbers of repetitions.

Although FIGURE 15 illustrates the method 1500, FIGURE 15 illustrates the method 1500, FIGURE 16 illustrates the method 1600, FIGURE 17 illustrates the method 1700, and FIGURE 18 illustrates the method 1800, various changes may be made to FIGURES 15-18. For example, while the methods 1500-1800 are shown as a series of steps, various steps could overlap, occur in parallel, occur in a different order, or occur multiple times. In another example, steps may be omitted or replaced by other steps. For example, steps of the method 1500-1800 can be executed in a different order.

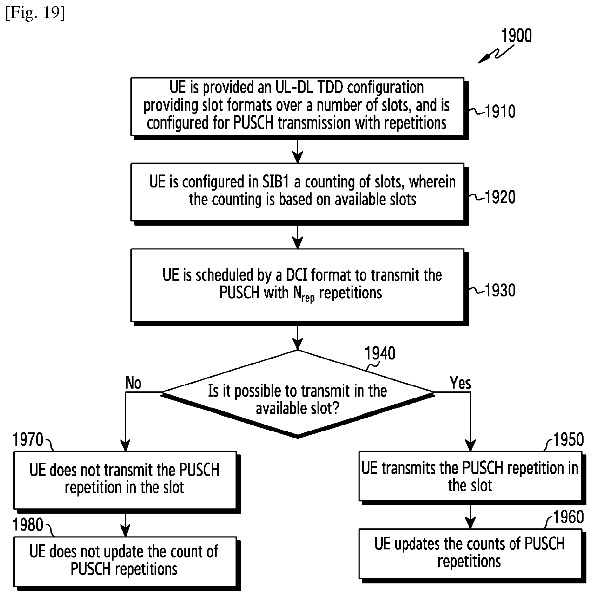

Embodiments of the present disclosure describe a determination of PUSCH repetitions based on available slots. This is described in the following examples and embodiments, such as those of FIGURES 19-21.

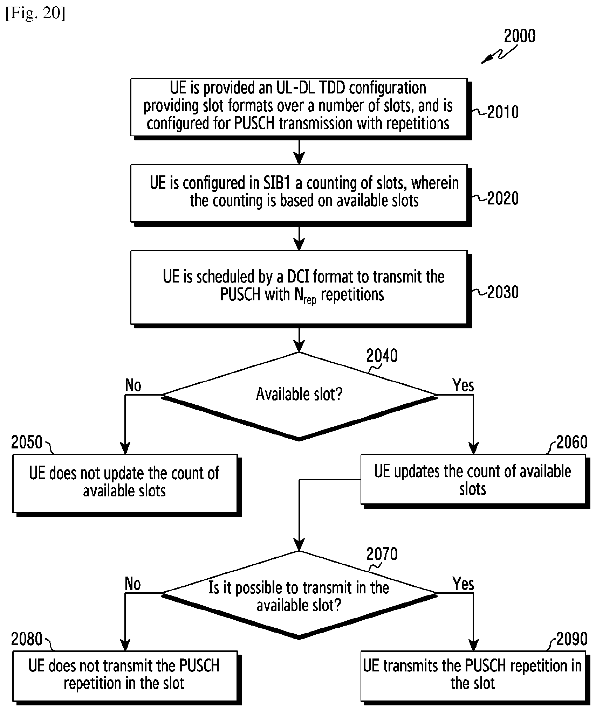

FIGURES 19 and 20 illustrate example methods 1900 and 2000, respectively, for determining a PUSCH transmission with repetitions based on available slots according to embodiments of the present disclosure. FIGURE 21 illustrates an example method 2100 for determining a PUSCH transmission with repetitions based on first information and second information according to embodiments of the present disclosure. The steps of the method 1900 of FIGURE 19, the method 2000 of FIGURE 20, and the method 2100 of FIGURE 21 can be performed by any of the UEs 111-119 of FIGURE 1, such as the UE 116 of FIGURE 3. The methods 1900-2100 are for illustration only and other embodiments can be used without departing from the scope of the present disclosure.

In certain embodiments, when a UE (such as the UE 116) is provided an UL-DL TDD configuration over a number of slots, is configured for PUSCH transmission with repetition Type A, is configured to transmit PUSCH repetitions by counting available slots and is scheduled by a DCI format to transmit the PUSCH with $N_{rep}$ repetitions, the UE can transmit in up to $N_{rep}$ slots that are indicate as UL slots by an UL-DL TDD configuration. In addition to the UL-DL TDD configuration, a slot can be unavailable due to other RRC configurations, wherein a slot is configured for transmission of another channel or signal. The actual number of PUSCH repetitions can be smaller than $N_{rep}$ as a slot determined as available based on one or more RRC configurations, can be unavailable due to one or more symbols in the slot being used for other DL or UL scheduled transmissions and the slot not including a number of consecutive UL symbols for a PUSCH transmission starting from a first symbol as indicated by the *SLIV* provided by the DCI format. When a UE can transmit a PUSCH repetition in non-consecutive symbols and over multiple slots, a slot can be unavailable when the number of symbols available for PUSCH transmission in a slot is less that a certain number of symbols, for example 2 symbols.

The method 1900, as illustrated in FIGURE 19, describes an example for a UE to determine a PUSCH transmission with repetitions based on available slots according to the disclosure.

In step 1910, a UE (such as the UE 116) is provided an UL-DL TDD configuration providing slot formats over a number of slots, and is configured for PUSCH transmission with repetitions. In step 1920, the UE is configured in SIB1 a counting of slots, wherein the counting is based on available. In step 1930, the UE is scheduled by a DCI format to transmit the PUSCH with $N_{rep}$ repetitions. In step 1940, the UE determines whether it is possible to transmit in a slot that was available based on an RRC configuration.

When it is possible to transmit a PUSCH repetition in the slot (as determined in step 1940), the UE in step 1950 transmits the PUSCH repetition in the slot. Then in step 1960, the UE updates the counting of repetitions.

Alternatively, when it is not possible to transmit a PUSCH repetition in the slot (as determined in step 1940), the UE does not transmit the PUSCH repetition in the slot (step 1970) and does not update the counting of repetitions (step 1980). It is noted that the UE determines the availability of subsequent slots until the counting reaches the values of $m + q$.

The method 2000, as illustrated in FIGURE 20, describes an example for a UE to determine a PUSCH transmission with repetitions based on available slots according to the disclosure.

In step 2010, a UE (such as the UE 116) is provided an UL-DL TDD configuration providing slot formats over a number of slots, and is configured for PUSCH transmission with repetitions. In step 2020, the UE is configured in SIB1 a counting of slots, wherein the counting is based on available. In step 2030, the UE is scheduled by a DCI format to transmit the PUSCH with $N_{rep}$ repetitions. In step 2040, the UE determines whether the slot is available for PUSCH transmission.

When the slot is not available (as determined in step 2040), the UE in step 2050 does not update the counting of available slots. Alternatively, when the slot is available for PUSCH transmission (as determined in step 2040), the UE in step 2060 updates the counting of available slots. After updating the counting of available slots the UE, in step 2070, determines whether it is possible to transmit in an available slot.

When it is not possible to transmit a PUSCH repetition in the slot (as determined in step 2070), the UE in step 2080 does not transmit the PUSCH repetition in the slot 1880. Alternatively, when it is possible to transmit a PUSCH repetition in the slot (as determined in step 2070), the UE in step 2090 transmits the PUSCH repetition in the slot.

It is noted that the method 2000, the counting of repetitions (also referred as the count of available slot), is updated after the slot is determined as available in step 2040 and is not further updated based on the subsequent step 2070. The availability of the slot in step 2040 can be determined based on a first indication by an RRC parameter. When the slot is determined as available, and the corresponding count of repetitions is updated as in step 2060, the PUSCH transmission may or may not be transmitted in the slot and the counting of repetitions is not further impacted. In one example whether the PUSCH is transmitted is based on a second indication as in step 2070. Here the second indication can be an indication to cancel the repetition in that slot by an UL CI, as in the methods 900 of FIGURE 9 or the method 1000 of FIGURE 10, or can be an indication by a DCI format of an adaptation of the UL-DL slot format configured by an RRC signaling, as described in the method 1100 of FIGURE 11. In another example whether the PUSCH is transmitted is based on a transmission priority and the counting of repetitions may or may not be affected.

It is also possible that the count of repetitions is not updated for the slot that is determined available for a first PUSCH transmission based on the first information, and it is updated only if the first PUSCH is transmitted in the slot. For example, transmission of the first PUSCH in the slot determined as available based on the first information can happen when the slot is determined as available for the first PUSCH transmission based on a second information, if provided, wherein the second information can be an UL CI, or an SFI, or a scheduling information in a DCI format or in a configuration by higher layer of a second transmission in resources allocated to the first PUSCH, or a configuration of DL transmission.

The method 2100 as illustrated in FIGURE 21 describes an example for a UE to determine a PUSCH transmission with repetitions based on a first information that is associated to a configured counting of repetitions and on a second information according to the disclosure.

In step 2110, a UE (such as the UE 116) is indicated/configured to transmit a PUSCH with repetitions over a number of slots. In step 2120 the UE is provided a configuration for counting of repetitions. A count of repetitions can be updated when a slot is determined available based on a first information associated to the configured counting of repetitions. In step 2130 the UE determines a first slot of the number of slots as available based on the first information. In step 2140 the UE determines the first slot of the number of slots as available based on a second information. In step 2150 the UE transmits a PUSCH repetition in the first slot and increments the count of repetitions.

It is also possible that whether to update the counting of repetitions based on an availability of a slot to transmit determined by a first information (for example after an RRC configuration that provides a direction for transmission) or based on whether the transmission happens in the slot determined as available, depends on whether the transmission is dynamically scheduled or semi-statically configured and/or whether it is a first repetition of the scheduled/configured transmission with repetitions. For example, for a PUSCH transmission with a configured grant, if the first repetition of the PUSCH in the first configured grant period is scheduled in a slot that is available according to the first information but cannot be transmitted based on a second information, the number of repetitions is not updated based on the availability determined by the first information. Thus, the first PUSCH repetition is effectively postponed, not dropped, in case transmission is not possible in the slot. In another example, the counting of repetitions is updated based on the slot availability determined by the first information, regardless of whether the PUSCH repetition of the PUSCH transmission with a configured grant is transmitted in the slot. This corresponds to dropping of a repetition if transmission is not possible in the determined available slot. In yet another example, the UE can assume that the counting of repetitions is updated based on the slot availability determined by the first information and that transmission in the determined available slot is possible. The above example also can apply when the PUSCH transmission with repetitions is scheduled by DCI format 0_1 or DCI format 0_2, or when the PUSCH transmission is scheduled by a DCI format with no repetitions, or when the PUSCH transmission with repetitions is scheduled by random access response (RAR) UL grant.

Although FIGURE 19 illustrates the method 1900, FIGURE 20 illustrates the method 2000, and FIGURE 21 illustrates the method 2100 various changes may be made to FIGURES 19-21. For example, while the methods 1900-2100 are shown as a series of steps, various steps could overlap, occur in parallel, occur in a different order, or occur multiple times. In another example, steps may be omitted or replaced by other steps. For example, steps of the methods 1900-2100 can be executed in a different order.

Embodiments of the present disclosure describe RV value after a transmission gap. This is described in the following examples and embodiments, such as those of FIGURE 22.

FIGURE 22 illustrates an example method 2200 for determining a PUSCH transmission with repetitions based on available slots according to embodiments of the present disclosure. The steps of the method 2200 of FIGURE 22 can be performed by any of the UEs 111-119 of FIGURE 1, such as the UE 116 of FIGURE 3. The method 2200 is for illustration only and other embodiments can be used without departing from the scope of the present disclosure.

In certain embodiments, a UE (such as the UE 116) configured for PUSCH transmissions can transmit a PUSCH repetitions with an RV from a predefined RV sequence for PUSCH transmissions. For example, {0,2,3,1}, {2,3,1,0}, {3,1,0,2}, {1,0,2,3}, {0,3,0,3} are RV sequences that a UE can use to transmit over sequential repetitions. A UE can select an RV for a repetition by cycling of different RVs from an RV sequence. It is also possible that one sequence is a default sequence, for example the default sequence is {0,2,3,1}, and additionally a gNB can configure a different RV sequence. The default RV sequence can be provided in a system information block (SIB).

When a UE resumes transmission of PUSCH repetitions after cancelation (wherein the cancelation can affect one or more repetitions in one or more consecutive or non-consecutive slots), the UE can use a same RV as the RV of the first canceled repetition. The cancelation of a repetition can be determined by an uplink CI provided by a DCI format or, in general, by information provided in a DCI format. It is possible that a PUSCH repetition is not transmitted in the slot because the slot is determined to not be available based on an indication other than the UL CI in a DCI format, or based on an UL-DL configuration that configures the slot as a DL slot, or based on indicated presence of an SS/PBCH block by *ssb-PositionsInBurst.* It is also possible that the unavailability of the slot is due to a scheduling of another UL transmission with higher priority in the slot. In one example, if a UE is scheduled to transmit a PUSCH with $N_{rep}$ Type A repetitions in consecutive slots $n$ = 1, ..., $N_{rep}$, and receives a DCI format that includes an UL CI indicating suspension of transmissions in time-frequency resources in slot m that include time-frequency resources for a repetition of the PUSCH transmission in slot m and the UL CI is applicable for the priority of the PUSCH transmission, the UE cancels the repetition(s) in slot m (subject to cancelation timelines being fulfilled), and resumes the repetition(s) after slot m without counting slot m in the number of slots allocated for repetitions of the PUSCH transmission. If the RV that the UE would have used to transmit the PUSCH repetition in slot $m$ is RV=0 according to the rules used by the UE to transmit PUSCH repetitions, when the UE resumes transmission of the PUSCH repetition, for example after $q$ slots, the UE transmits the PUSCH in slot $m+q$ with RV=0. It is possible that the RV used for a repetition of a PUSCH transmission in slot $m+q$ is determined from the RV used for a repetition of the PUSCH transmission in slot $m-1$ (first and last slots indicated by the DCI format for cancelation of the repetitions are slots $m$ and $m+q-1,$ respectively), by determining an RV value for repetitions in each slot from slot $m$ to slot $m+q,$ or in slot $m$ and in slot $m+q$ but not in slots between slot $m$ and slot $m+q,$ according to the rules for deriving the RV for repetitions of the PUSCH transmission. Subsequent PUSCH repetitions transmitted in slots after slot $m+q$ are transmitted with an RV according to the rules that the UE uses for that PUSCH transmission with repetitions. In another example, if a UE is scheduled to transmit a PUSCH with $N_{rep}$ Type A repetitions in consecutive slots $n$ = 1, ... , $N_{rep},$ and if slot m is unavailable due to a configuration of the slot as DL or due to an indication by *ssb-PositionsInBurst* of a reception of an SS/PBCH block. If the RV that the UE would have used in slot $m$ to transmit the PUSCH repetition is RV=0 according to the rules used by the UE to transmit PUSCH repetitions, when the UE transmits the PUSCH repetition in slot $m+1$, the UE transmits the PUSCH in slot $m+1$ with RV=0. It is possible that starting from the RV of slot $m-1$, RVs for slots $m$ and $m+1$ are determined according the rules used by the UE for deriving the RV for the repetitions of the PUSCH transmission, and the repetition in slot $m+1$ is transmitted with the corresponding determined RV. Subsequent PUSCH repetitions transmitted in slots after slot $m+1$ are transmitted with an RV according to the rules that the UE uses for that PUSCH transmission with repetitions.

The method 2200, as illustrated in FIGURE 22, describes an example procedure for a UE to determine a PUSCH transmission with repetitions based on available slots according to the disclosure.

In step 2210, a UE (such as the UE 116) is configured/indicated to transmit a first PUSCH with $N_{rep}$ repetitions using a counting of available slots. In step 2220, the UE is scheduled by a DCI format to transmit a second PUSCH or a PUCCH with repetitions $in \ n = N_{rep} - 1, N_{rep}$ slots (wherein the second PUSCH transmission or the PUCCH transmission, respectively, have higher priority than the first PUSCH transmission). In step 2230, the UE does not transmit repetitions of the first PUSCH transmission in slots $n = N_{rep} - 1, N_{rep}$. In step 2240, the UE resumes repetitions of the first PUSCH transmission in an available slot m and transmits the PUSCH repetition of the first PUSCH in slot m with the same RV as the RV associated to the repetition of the first PUSCH in slot $n = N_{rep} - 1$. Alternatively in step 2240 the UE resumes the repetitions of the first PUSCH transmission in slot $m$ with an RV determined from the RV of the last repetition of the first PUSCH before the transmission gap by updating the RV for each repetition during the transmission gap.

Although FIGURE 22 illustrates the method 2200 various changes may be made to FIGURE 22. For example, while the method 2200 is shown as a series of steps, various steps could overlap, occur in parallel, occur in a different order, or occur multiple times. In another example, steps may be omitted or replaced by other steps. For example, steps of the method 2200 can be executed in a different order.

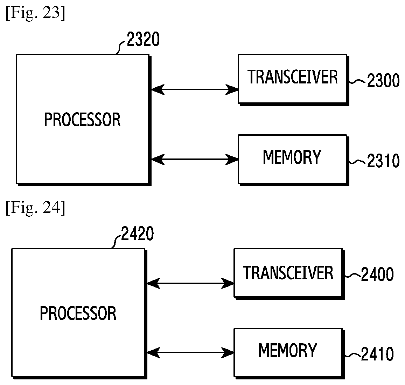

FIGURE 23 illustrates a structure of a UE according to an embodiment of the disclosure.

As shown in FIG.23, the UE according to an embodiment may include a transceiver 2310, a memory 2320, and a processor 2330. The transceiver 2310, the memory 2320, and the processor 2330 of the UE may operate according to a communication method of the UE described above. However, the components of the UE are not limited thereto. For example, the UE may include more or fewer components than those described above. In addition, the processor 2330, the transceiver 2310, and the memory 2320 may be implemented as a single chip. Also, the processor 2330 may include at least one processor. Furthermore, the UE of Figure 23 corresponds to the UE of the Figure 3.

The transceiver 2310 collectively refers to a UE receiver and a UE transmitter, and may transmit/receive a signal to/from a base station or a network entity. The signal transmitted or received to or from the base station or a network entity may include control information and data. The transceiver 2310 may include a RF transmitter for up-converting and amplifying a frequency of a transmitted signal, and a RF receiver for amplifying low-noise and down-converting a frequency of a received signal. However, this is only an example of the transceiver 2310 and components of the transceiver 2310 are not limited to the RF transmitter and the RF receiver.

Also, the transceiver 2310 may receive and output, to the processor 2330, a signal through a wireless channel, and transmit a signal output from the processor 2330 through the wireless channel.

The memory 2320 may store a program and data required for operations of the UE. Also, the memory 2320 may store control information or data included in a signal obtained by the UE. The memory 2320 may be a storage medium, such as read-only memory (ROM), random access memory (RAM), a hard disk, a CD-ROM, and a DVD, or a combination of storage media.

The processor 2330 may control a series of processes such that the UE operates as described above. For example, the transceiver 2310 may receive a data signal including a control signal transmitted by the base station or the network entity, and the processor 2330 may determine a result of receiving the control signal and the data signal transmitted by the base station or the network entity.

FIGURE 24 illustrates a structure of a base station according to an embodiment of the disclosure.

As shown in FIG. 24, the base station according to an embodiment may include a transceiver 2410, a memory 2420, and a processor 2430. The transceiver 2410, the memory 2420, and the processor 2430 of the base station may operate according to a communication method of the base station described above. However, the components of the base station are not limited thereto. For example, the base station may include more or fewer components than those described above. In addition, the processor 2430, the transceiver 2410, and the memory 2420 may be implemented as a single chip. Also, the processor 2430 may include at least one processor. Furthermore, the base station of Figure 24 corresponds to the BS of the Figure 2.

The transceiver 2410 collectively refers to a base station receiver and a base station transmitter, and may transmit/receive a signal to/from a terminal(UE) or a network entity. The signal transmitted or received to or from the terminal or a network entity may include control information and data. The transceiver 2410 may include a RF transmitter for up-converting and amplifying a frequency of a transmitted signal, and a RF receiver for amplifying low-noise and down-converting a frequency of a received signal. However, this is only an example of the transceiver 2410 and components of the transceiver 2410 are not limited to the RF transmitter and the RF receiver.

Also, the transceiver 2410 may receive and output, to the processor 2430, a signal through a wireless channel, and transmit a signal output from the processor 2430 through the wireless channel.

The memory 2420 may store a program and data required for operations of the base station. Also, the memory 2420 may store control information or data included in a signal obtained by the base station. The memory 2420 may be a storage medium, such as read-only memory (ROM), random access memory (RAM), a hard disk, a CD-ROM, and a DVD, or a combination of storage media.

The processor 2430 may control a series of processes such that the base station operates as described above. For example, the transceiver 2410 may receive a data signal including a control signal transmitted by the terminal, and the processor 2430 may determine a result of receiving the control signal and the data signal transmitted by the terminal.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

Although the present disclosure has been described with exemplary embodiments, various changes and modifications may be suggested to one skilled in the art. The scope of the invention is therefore defined by the appended claims. None of the description in this application should be read as implying that any particular element, step, or function is an essential element that must be included in the claims scope. The scope of patented subject matter is defined by the claims.

**Claims**

1. A user equipment, UE, in wireless communication system, the UE comprising:

   a transceiver (2300); and

at least one processor (2320) coupled with the transceiver and configured to:

   receive, from a base station, configuration information related to a physical uplink shared channel, PUSCH, repetition, wherein the configuration information includes first information on a number of the PUSCH repetition and second information on counting of the PUSCH repetition,
   identify a plurality of available slots for the PUSCH repetition based on the configuration information, and
   transmit, to the base station, a PUSCH of the PUSCH repetition based on the plurality of available slots in case that the PUSCH of the PUSCH repetition is determined available,

wherein the PUSCH of the PUSCH repetition is determined not available in a slot among the plurality of available slots, in case that a priority of the PUSCH repetition is smaller than a priority of another PUSCH or a physical uplink control channel, PUCCH, overlapping with the PUSCH repetition in the slot among the plurality of available slots, and
wherein the slot among the plurality of available slots is counted for the PUSCH repetition in case that the PUSCH of the PUSCH repetition is determined not available.

2. The UE of claim 1,
wherein the plurality of available slots are identified based on an uplink-downlink time division duplexing, UL-DL TDD, configuration provided by a higher layer, and include at least one symbol for transmission of UL signal.

3. A base station in wireless communication system, the base station comprising:

   a transceiver (2400); and
   at least one processor (2420) coupled with the transceiver and configured to:

   transmit, to a user equipment, UE, configuration information related to a physical uplink shared channel, PUSCH, repetition, wherein the configuration information includes first information on a number of the PUSCH repetition and second information on counting of the PUSCH repetition,
   receive, from the UE, a PUSCH of the PUSCH repetition based on a plurality of available slots, in case that the PUSCH of the PUSCH repetition is determined available,

wherein the plurality of available slots for the PUSCH repetition are associated with the configuration information,

wherein the PUSCH of the PUSCH repetition is not available in a slot among the plurality of available slots, in case that a priority of the PUSCH repetition is smaller than a priority of another PUSCH or a physical uplink control channel, PUCCH, overlapping with the PUSCH repetition in the slot among the plurality of available slots, and

wherein the slot among the plurality of available slots is counted for the PUSCH repetition in case that the PUSCH of the PUSCH repetition is not available.

4. The base station of claim 3,
wherein the plurality of available slots are associated with an uplink-downlink time division duplexing, UL-DL TDD, configuration provided by a higher layer, and include at least one symbol for transmission of UL signal.

5. A method performed by a user equipment, UE, in wireless communication system, the method comprising:

receiving, from a base station, configuration information related to a physical uplink shared channel, PUSCH, repetition,

wherein the configuration information includes first information on a number of the PUSCH repetition and second information on counting of the PUSCH repetition,

identifying a plurality of available slots for the PUSCH repetition based on the configuration information; and

transmitting, to the base station, a PUSCH of the PUSCH repetition based on the plurality of available slots, in case that the PUSCH of the PUSCH repetition is determined available; and

wherein the PUSCH of the PUSCH repetition is determined not available in a slot among the plurality of available slots, in case that a priority of the PUSCH repetition is smaller than a priority of another PUSCH or a physical uplink control channel, PUCCH, overlapping with the PUSCH repetition in the slot among the plurality of available slots, and

wherein the slot among the plurality of available slots is counted for the PUSCH repetition in case that the PUSCH of the PUSCH repetition is determined not available.

6. The method of claim 5,
wherein the plurality of available slots are identified based on an uplink-downlink time division duplexing, UL-DL TDD, configuration provided by a higher layer, and include at least one symbol for transmission of UL signal.

7. A method performed by a base station in wireless communication system, the method comprising:

transmitting, to a user equipment, UE, configuration information related to physical uplink shared channel, PUSCH, repetition,

wherein the configuration information includes first information on a number of the PUSCH repetition and second information on counting of the PUSCH repetition, and

receiving, from the UE, a PUSCH of the PUSCH repetition based on a plurality of available slots, in case that the PUSCH of the PUSCH repetition is determined available,

wherein the plurality of available slots for the PUSCH repetition are associated with the configuration information,

wherein the PUSCH of the PUSCH repetition is not available in a slot among the plurality of available slots, in case that a priority of the PUSCH repetition is smaller than a priority of another PUSCH or a physical uplink control channel, PUCCH, overlapping with the PUSCH repetition in the slot among the plurality of available slots, and

wherein the slot among the plurality of available slots is counted for the PUSCH repetition in case that the PUSCH of the PUSCH repetition is not available.

8. The method of claim 7,
wherein the plurality of available slots are associated with an uplink-downlink time division duplexing, UL-DL TDD, configuration provided by a higher layer, and include at least one symbol for transmission of UL signal.

**Patentansprüche**

1. Benutzergerät, UE, in einem drahtlosen Kommunikationssystem, wobei das UE Folgendes umfasst:

einen Transceiver (2300); und
mindestens einen Prozessor (2320), der mit dem Transceiver gekoppelt ist und konfiguriert ist zum:

Empfangen, von einer Basisstation, von Konfigurationsinformationen, die sich auf eine Wiederholung eines physikalischen gemeinsam genutzten Uplink-Kanals, PUSCH, beziehen, wobei die Konfigurationsinformationen erste Informationen über eine Anzahl der PUSCH-Wiederholungen und zweite Informationen über eine Zählung der PUSCH-Wiederholungen beinhalten,

Identifizieren einer Vielzahl von verfügbaren Schlitzen für die PUSCH-Wiederholung basierend auf den Konfigurationsinformationen, und

Übertragen, an die Basisstation, eines PUSCH der PUSCH-Wiederholung basierend auf der Vielzahl von verfügbaren Schlitzen, falls der PUSCH der PUSCH-Wiederholung als verfügbar bestimmt wird,

wobei der PUSCH der PUSCH-Wiederholung in einem Schlitz aus der Vielzahl von verfügbaren Schlitzen als nicht verfügbar bestimmt wird, falls eine Priorität der PUSCH-Wiederholung kleiner ist als eine Priorität eines anderen PUSCH oder eines physikalischen Uplink-Steuerkanals, PUCCH, der die PUSCH-Wiederholung in dem Schlitz aus der Vielzahl von verfügbaren Schlitzen überlappt, und

wobei der Schlitz aus der Vielzahl von verfügbaren Schlitzen für die PUSCH-Wiederholung gezählt wird, falls der PUSCH der PUSCH-Wiederholung als nicht verfügbar bestimmt wird.

2. UE nach Anspruch 1,
wobei die Vielzahl von verfügbaren Schlitzen basierend auf einer Uplink-Downlink-Zeitduplex-, UL-DL-TDD, -Konfiguration, die von einer oberen Schicht bereitgestellt wird, identifiziert wird und mindestens ein Symbol zur Übertragung eines UL-Signals beinhaltet.

3. Basisstation in einem drahtlosen Kommunikationssystem, wobei die Basisstation Folgendes umfasst:

einen Transceiver (2400); und
mindestens einen Prozessor (2420), der mit dem Transceiver gekoppelt ist und konfiguriert ist zum:

Übertragen, an ein Benutzergerät, UE, von Konfigurationsinformationen, die sich auf eine Wiederholung eines physikalischen gemeinsam genutzten Uplink-Kanals, PUSCH, beziehen, wobei die Konfigurationsinformationen erste Informationen über eine Anzahl der PUSCH-Wiederholungen und zweite Informationen über eine Zählung der PUSCH-Wiederholungen beinhalten,

Empfangen, von dem UE, eines PUSCH der PUSCH-Wiederholung basierend auf einer Vielzahl von verfügbaren Schlitzen, falls der PUSCH der PUSCH-Wiederholung als verfügbar bestimmt wird,

wobei die Vielzahl von verfügbaren Schlitzen für die PUSCH-Wiederholung mit den Konfigurationsinformationen assoziiert ist,

wobei der PUSCH der PUSCH-Wiederholung in einem Schlitz aus der Vielzahl von verfügbaren Schlitzen nicht verfügbar ist, falls eine Priorität der PUSCH-Wiederholung kleiner ist als eine Priorität eines anderen PUSCH oder eines physikalischen Uplink-Steuerkanals, PUCCH, der die PUSCH-Wiederholung in dem Schlitz aus der Vielzahl von verfügbaren Schlitzen überlappt, und

wobei der Schlitz aus der Vielzahl von verfügbaren Schlitzen für die PUSCH-Wiederholung gezählt wird, falls der PUSCH der PUSCH-Wiederholung nicht verfügbar ist.

4. Basisstation nach Anspruch 3,
wobei die Vielzahl von verfügbaren Schlitzen mit einer Uplink-Downlink-Zeitduplex-, UL-DL-TDD, -Konfiguration, die von einer oberen Schicht bereitgestellt wird, assoziiert ist und mindestens ein Symbol zur Übertragung eines UL-Signals beinhaltet.

5. Verfahren, das von einem Benutzergerät, UE, in einem drahtlosen Kommunikationssystem durchgeführt wird, wobei das Verfahren Folgendes umfasst:

Empfangen, von einer Basisstation, von Konfigurationsinformationen, die sich auf eine Wiederholung eines physikalischen gemeinsam genutzten Uplink-Kanals, PUSCH, beziehen, wobei die Konfigurationsinformationen erste Informationen über eine Anzahl der PUSCH-Wiederholungen und zweite Informationen über eine Zählung der PUSCH-Wiederholungen beinhalten,

Identifizieren einer Vielzahl von verfügbaren Schlitzen für die PUSCH-Wiederholung basierend auf den Konfigurationsinformationen; und

Übertragen, an die Basisstation, eines PUSCH der PUSCH-Wiederholung basierend auf der Vielzahl von verfügbaren Schlitzen, falls der PUSCH der PUSCH-Wiederholung als verfügbar bestimmt wird; und

wobei der PUSCH der PUSCH-Wiederholung in einem Schlitz aus der Vielzahl von verfügbaren Schlitzen als nicht verfügbar bestimmt wird, falls eine Priorität der PUSCH-Wiederholung kleiner ist als eine Priorität eines anderen PUSCH oder eines physikalischen Uplink-Steuerkanals, PUCCH, der die PUSCH-Wiederholung in dem Schlitz aus der Vielzahl von verfügbaren Schlitzen überlappt, und

wobei der Schlitz aus der Vielzahl von verfügbaren Schlitzen für die PUSCH-Wiederholung gezählt wird, falls der PUSCH der PUSCH-Wiederholung als nicht verfügbar bestimmt wird.

**6.** Verfahren nach Anspruch 5,
wobei die Vielzahl von verfügbaren Schlitzen basierend auf einer Uplink-Downlink-Zeitduplex-, UL-DL-TDD, -Konfiguration, die von einer oberen Schicht bereitgestellt wird, identifiziert wird und mindestens ein Symbol zur Übertragung eines UL-Signals beinhaltet.

**7.** Verfahren, das von einer Basisstation in einem drahtlosen Kommunikationssystem durchgeführt wird, wobei das Verfahren Folgendes umfasst:

Übertragen, an ein Benutzergerät, UE, von Konfigurationsinformationen, die sich auf eine Wiederholung eines physikalischen gemeinsam genutzten Uplink-Kanals, PUSCH, beziehen, wobei die Konfigurationsinformationen erste Informationen über eine Anzahl der PUSCH-Wiederholungen und zweite Informationen über eine Zählung der PUSCH-Wiederholungen beinhalten, und
Empfangen, von dem UE, eines PUSCH der PUSCH-Wiederholung basierend auf einer Vielzahl von verfügbaren Schlitzen, falls der PUSCH der PUSCH-Wiederholung als verfügbar bestimmt wird,
wobei die Vielzahl von verfügbaren Schlitzen für die PUSCH-Wiederholung mit den Konfigurationsinformationen assoziiert ist,
wobei der PUSCH der PUSCH-Wiederholung in einem Schlitz aus der Vielzahl von verfügbaren Schlitzen nicht verfügbar ist, falls eine Priorität der PUSCH-Wiederholung kleiner ist als eine Priorität eines anderen PUSCH oder eines physikalischen Uplink-Steuerkanals, PUCCH, der die PUSCH-Wiederholung in dem Schlitz aus der Vielzahl von verfügbaren Schlitzen überlappt, und
wobei der Schlitz aus der Vielzahl von verfügbaren Schlitzen für die PUSCH-Wiederholung gezählt wird, falls der PUSCH der PUSCH-Wiederholung nicht verfügbar ist.

**8.** Verfahren nach Anspruch 7,
wobei die Vielzahl von verfügbaren Schlitzen mit einer Uplink-Downlink-Zeitduplex-, UL-DL-TDD, -Konfiguration, die von einer oberen Schicht bereitgestellt wird, assoziiert ist und mindestens ein Symbol zur Übertragung eines UL-Signals beinhaltet.

**Revendications**

**1.** Équipement utilisateur, UE, dans un système de communication sans fil, l'UE comprenant :

un émetteur-récepteur (2300) ; et
au moins un processeur (2320), couplé à l'émetteur-récepteur et configuré pour :

recevoir, à partir d'une station de base, des informations de configuration relatives à une répétition de canal physique partagé de liaison montante, PUSCH, les informations de configuration comprenant des premières informations sur un nombre de répétitions PUSCH et des secondes informations sur le comptage des répétitions PUSCH,
identifier une pluralité de créneaux disponibles pour la répétition PUSCH en se basant sur les informations de configuration, et
transmettre, à la station de base, un PUSCH de la répétition PUSCH en se basant sur la pluralité de créneaux disponibles dans le cas où le PUSCH de la répétition PUSCH est déterminé comme étant disponible,

dans lequel le PUSCH de la répétition PUSCH est déterminé comme n'étant pas disponible dans un créneau parmi la pluralité de créneaux disponibles, dans le cas où une priorité de la répétition PUSCH est inférieure à une priorité d'un autre PUSCH ou d'un canal de commande de liaison montante physique, PUCCH, chevauchant la répétition PUSCH dans le créneau parmi la pluralité de créneaux disponibles, et
dans lequel le créneau parmi la pluralité de créneaux disponibles est compté pour la répétition PUSCH au cas où le PUSCH de la répétition PUSCH est déterminé comme n'étant pas disponible.

**2.** UE de la revendication 1,
dans lequel la pluralité de créneaux disponibles est identifiée sur la base d'une configuration de duplexage temporel de liaison montante - liaison descendante, UL-DL TDD, fournie par une couche supérieure, et comprend au moins un symbole pour la transmission d'un signal UL.

**3.** Station de base dans un système de communication sans fil, la station de base comprenant :

un émetteur-récepteur (2400) ; et
au moins un processeur (2420), couplé à l'émetteur-récepteur et configuré pour :

transmettre, à un équipement utilisateur, UE, des informations de configuration relatives à une répétition de canal physique partagé de liaison montante, PUSCH, les informations de configuration comprenant des premières informations sur un nombre de répétitions PUSCH et des secondes informations sur le comptage des répétitions PUSCH,

recevoir, de l'UE, un PUSCH de la répétition PUSCH en se basant sur une pluralité de créneaux disponibles dans le cas où le PUSCH de la répétition PUSCH est déterminé comme étant disponible,

dans laquelle la pluralité de créneaux disponibles pour la répétition PUSCH est associée aux informations de configuration,
dans laquelle le PUSCH de la répétition PUSCH n'est pas disponible dans un créneau parmi la pluralité de créneaux disponibles, dans le cas où une priorité de la répétition PUSCH est inférieure à une priorité d'un autre PUSCH ou d'un canal de commande de liaison montante physique, PUCCH, chevauchant la répétition PUSCH dans le créneau parmi la pluralité de créneaux disponibles, et
dans laquelle le créneau parmi la pluralité de créneaux disponibles est compté pour la répétition PUSCH au cas où le PUSCH de la répétition PUSCH n'est pas disponible.

4. Station de base de la revendication 3,
dans laquelle la pluralité de créneaux disponibles est associée à une configuration de duplexage temporel de liaison montante - liaison descendante, UL-DL TDD, fournie par une couche supérieure, et comprend au moins un symbole pour la transmission d'un signal UL.

5. Procédé exécuté par un équipement utilisateur, UE, dans un système de communication sans fil, le procédé comprenant :

recevoir, à partir d'une station de base, des informations de configuration relatives à une répétition de canal physique partagé de liaison montante, PUSCH, les informations de configuration comprenant des premières informations sur un nombre de répétitions PUSCH et des secondes informations sur le comptage des répétitions PUSCH,
identifier une pluralité de créneaux disponibles pour la répétition PUSCH en se basant sur les informations de configuration; et
transmettre, à la station de base, un PUSCH de la répétition PUSCH en se basant sur la pluralité de créneaux disponibles dans le cas où le PUSCH de la répétition PUSCH est déterminé comme étant disponible ; et
dans lequel le PUSCH de la répétition PUSCH est déterminé comme n'étant pas disponible dans un créneau parmi la pluralité de créneaux disponibles, dans le cas où une priorité de la répétition PUSCH est inférieure à une priorité d'un autre PUSCH ou d'un canal de commande de liaison montante physique, PUCCH, chevauchant la répétition PUSCH dans le créneau parmi la pluralité de créneaux disponibles, et
dans lequel le créneau parmi la pluralité de créneaux disponibles est compté pour la répétition PUSCH au cas où le PUSCH de la répétition PUSCH est déterminé comme n'étant pas disponible.

6. Procédé de la revendication 5,
dans lequel la pluralité de créneaux disponibles est identifiée sur la base d'une configuration de duplexage temporel de liaison montante - liaison descendante, UL-DL TDD, fournie par une couche supérieure, et comprend au moins un symbole pour la transmission d'un signal UL.

7. Procédé exécuté par une station de base dans un système de communication sans fil, le procédé comprenant :

transmettre, à un équipement utilisateur, UE, des informations de configuration relatives à une répétition de canal physique partagé de liaison montante, PUSCH, les informations de configuration comprenant des premières informations sur un nombre de répétitions PUSCH et des secondes informations sur le comptage des répétitions PUSCH, et
recevoir, de l'UE, un PUSCH de la répétition PUSCH en se basant sur une pluralité de créneaux disponibles dans le cas où le PUSCH de la répétition PUSCH est déterminé comme étant disponible,
dans lequel la pluralité de créneaux disponibles pour la répétition PUSCH est associée aux informations de configuration,
dans lequel le PUSCH de la répétition PUSCH n'est pas disponible dans un créneau parmi la pluralité de créneaux disponibles, dans le cas où une priorité de la répétition PUSCH est inférieure à une priorité d'un autre PUSCH ou d'un canal de commande de liaison montante physique, PUCCH, chevauchant la répétition PUSCH dans le créneau parmi la pluralité de créneaux disponibles, et
dans lequel le créneau parmi la pluralité de créneaux disponibles est compté pour la répétition PUSCH au cas où le PUSCH de la répétition PUSCH n'est pas disponible.

8. Procédé de la revendication 7,
dans lequel la pluralité de créneaux disponibles est associée à une configuration de duplexage temporel de liaison montante - liaison descendante, UL-DL TDD, fournie par une couche supérieure, et comprend au moins un symbole pour la transmission

**EP 4 183 200 B1**

d'un signal UL.

[Fig. 1]

[Fig. 2]

102

[Fig. 3]

116

305

310

325

330

**SPEAKER**

**RX PROCESSING CIRCUITRY**

**RF TRANSCEIVER**

320

315

**MICROPHONE**

**TX PROCESSING CIRCUITRY**

345

340

350

**I/O IF**

**CONTROLLER/ PROCESSOR**

**INPUT DEVICE(S)**

**DISPLAY**

355

360

**MEMORY**

**OPERATING SYSTEM** 361

**APPLICATIONS** 362

EP 4 183 200 B1

[Fig. 4]

400

Data In → **CHANNEL CODING &MOD.** (405) → **S-TO-P** (410) → **SIZE N IFFT** (415) → **P-TO-S** (420) → **ADD CYCLIC PREFIX** (425) → **UC** (430) → To Channel

From
Channel

→

| DC | 555 |

↓

| REMOVE CYCLIC PREFIX | 560 |

↓

| S-TO-P | 565 |

↓

| SIZE N FFT | 570 |

↓

| P-TO-S | 575 |

↓

| CHANNEL DECOD.& DEMOD. | 580 |

↓

Data
Out

500

[Fig. 5]

[Fig. 6]

600

┌─────────────────────────────────────────┐
│ UE is provided an UL-DL TDD configuration │
│ providing slot formats over a number of slots, and is │── 610
│ configured for PUSCH transmission with repetitions │
└─────────────────────────────────────────┘
                      │
                      ▼
┌─────────────────────────────────────────┐
│ UE is scheduled by a DCI format to transmit the │
│ PUSCH with $N_{rep}$ repetitions │── 620
└─────────────────────────────────────────┘
                      │
                      ▼
                     630
         ◇───────────────────────◇
   No   /  Slot available for transmission  \   Yes
  ◀────<      of a PUSCH repetition?          >────▶
         \───────────────────────/
660                                              640
  │                                               │
  ▼                                               ▼
┌──────────────────────────┐      ┌──────────────────────────┐
│ UE does not transmit the PUSCH │      │ UE transmits the PUSCH repetition in │
│ repetition in the slot │      │ the slot │
└──────────────────────────┘      └──────────────────────────┘
670                                   650
  │                                    │
  ▼                                    ▼
┌──────────────────────────┐      ┌──────────────────────────┐
│ UE does not update the count of │      │ UE Updates the counts of PUSCH │
│ PUSCH repetitions │      │ repetitions │
└──────────────────────────┘      └──────────────────────────┘

[Fig. 7]

700

┌─────────────────────────────────────────┐
│ UE is configured/indicated to transmit a first PUSCH with $N_{rep}$ repetitions │── 710
│ in consecutive slots n = 1, ⋯ , $N_{rep}$ │
└─────────────────────────────────────────┘
                      │
                      ▼
┌─────────────────────────────────────────┐
│ UE is scheduled by a DCI format to transmit a second PUSCH or a │
│ PUCCH with repetitions in n = $N_{rep}$ - 1, $N_{rep}$, wherein the second PUSCH │── 720
│ or the PUCCH, respectively, have same priority as the first PUSCH │
└─────────────────────────────────────────┘
                      │
                      ▼
┌─────────────────────────────────────────┐
│ UE transmits $N_{rep}$ - 2 PUSCH repetition in $N_{rep}$ - 2 consecutive slots and │
│ updates the counting of number of PUSCH repetitions for each available │── 730
│ slot R = $N_{rep}$ - 2 │
└─────────────────────────────────────────┘
                      │
                      ▼
┌─────────────────────────────────────────┐
│ UE transmits the second PUSCH or the PUCCH in slots n = $N_{rep}$ - 1, $N_{rep}$ │── 740
└─────────────────────────────────────────┘
                      │
                      ▼
┌─────────────────────────────────────────┐
│ UE terminates the first PUSCH transmission │── 750
└─────────────────────────────────────────┘

[Fig. 8]

800

| UE is configured/indicated to transmit a first PUSCH with $N_{rep}$ repetitions in consecutive slots n = 1, ⋯ , $N_{rep}$ | 810 |

| UE is scheduled by a DCI format to transmit a second PUSCH or a PUCCH with repetitions in n = $N_{rep}$ - 1, $N_{rep}$, wherein the second PUSCH or the PUCCH, respectively, have larger priority than the first PUSCH | 820 |

| UE transmits $N_{rep}$ - 2 PUSCH repetition in $N_{rep}$ - 2 consecutive slots and updates the counting of number of PUSCH repetitions for each available slot R = $N_{rep}$ - 2 | 830 |

| UE transmits the second PUSCH or the PUCCH in slots n = $N_{rep}$ – 1, $N_{rep}$ | 840 |

| UE resumes the first PUSCH transmission after the second PUSCH or PUCCH transmission | 850 |

[Fig. 9]

900

| UE is configured/indicated to transmit a PUSCH with $N_{rep}$ repetitions in consecutive slots n = 1, ⋯, $N_{rep}$ | 910 |

| UE receives a DCI format including a CI indicating suspension of transmissions in time-frequency resources in slot m that include time–frequency resources for a repetition of the PUSCH transmission in slot m | 920 |

930

Is UL CI applicable?

No        Yes

960

| UE does not cancel repetitions in slot m and transmits the PUSCH repetition |

940

| UE cancels PUSCH repetitions in slot m |

970

| UE updates the count of PUSCH repetitions in slot m |

950

| UE does not updates the count of PUSCH repetitions in slot m |

[Fig. 10]

1000

UE is configured/indicated to transmit a PUSCH with $N_{rep}$ repetitions in consecutive slots n = 1, ···, $N_{rep}$ ~1010

UE is indicated a number of deferred repetitions q ~1020

UE detects a DCI format 2_4 in slot m < $N_{rep}$ and cancels PUSCH repetitions as applicable by a corresponding UL CI provided by DCI format 2_4 ~1030

1040
Is the slot available?

No → 1070
UE does not transmit the PUSCH repetition in the slot

1080
UE does not update the count of PUSCH repetitions

Yes → 1050
UE transmits the PUSCH repetition in the slot

1060
UE updates the counts of PUSCH repetitions

[Fig. 11]

1100

| UE is provided by higher layers an UL-DL TDD configuration over a number of slots | 1110 |

| UE is scheduled by a DCI to transmit a PUSCH with $N_{rep}$ repetition | 1120 |

| UE monitors PDCCH for detection of a DCI format 2_0, wherein a SFI-index field value in the DCI format 2_0 indicates to a UE a slot format for each slot in a number of slots starting from a slot where the UE detects the DCI format 2_0 | 1130 |

| UE transmits the PUSCH with repetitions excluding slots where the number of symbols indicated as UL symbols by the SFI is less than the number of symbols of a PUSCH repetition | 1140 |

| UE updates the counting of the number of PUSCH repetitions excluding slots where the UE does not transmit PUSCH based on the determination of an available slot | 1150 |

[Fig. 12]

1200

| UE is provided by higher layers an UL-DL TDD configuration over a number of slots | 1210 |

| UE is scheduled a PUCCH transmission with HARQ-ACK information corresponding to a SPS PDSCH reception with $N_{rep}$ repetitions | 1220 |

| UE detects a DCI format scheduling a SPS PDSCH reception, and detects a DCI format 2_0, wherein a SFI-index field value indicates a slot format over a number of $N_{SFI}$ slots | 1230 |

| UE determines a slot format based on the UL-DL TDD configuration and the SFI indication | 1240 |

| UE transmits PUCCH symbols in symbols that are determined as UL symbols | 1250 |

[Fig. 13]

1300

UE is provided by higher layers an UL-DL TDD configuration over a number of slots ~1310

↓

UE is scheduled a PUCCH transmission with CSI information corresponding to a semi-static PUCCH configuration with repetitions ~1320

↓

UE determines a symbol as available for UL transmission from a higher layer configuration and an indication in a DCI format, if present ~1330

↓

UE transmits PUCCH symbols of the semi-static configured PUCCH with CSI in the determined UL symbols ~1340

[Fig. 14]

1400

UE is provided by higher layers an UL-DL TDD configuration over a number of slots ~1410

↓

UE is scheduled a PUCCH transmission with HARQ-ACK information corresponding to a SPS PDSCH reception with $N_{rep}$ repetitions ~1420

↓

UE detects a DCI format scheduling a SPS PDSCH reception, and detects a DCI format 2_0, wherein a SFI-index field value indicates a slot format over a number of $N_{SFI}$ slots ~1430

↓

UE determines a slot format based on the UL-DL TDD configuration and the SFI indication ~1440

↓

UE transmits PUCCH symbols in symbols that are determined as UL symbols ~1450

[Fig. 15]

1500

| UE is provided a configuration for a first TDRA table with a first set of numbers of repetitions and a second TDRA table with a second set of numbers of repetitions for PUSCH transmission | ~1510 |

| UE is indicated a TDRA table from the configured TDRA tables in a DCI format scheduling a PUSCH transmission with repetitions | ~1520 |

| UE is indicated a value m in a DCI format, wherein the value provides a row index m + 1 to the indicated table that provides a number of repetitions | ~1530 |

| UE transmits a PUSCH with the indicated number of repetitions by counting repetitions based on the indicated TDRA table | ~1540 |

[Fig. 16]

1600

| UE is provided an UL-DL TDD configuration providing slot formats over a number of slots, and is configured for PUSCH transmission with repetitions | ~1610 |

| UE is configured in SIB1 a counting of slots, wherein the counting is based on available slots or consecutive physical slots | ~1620 |

| UE is scheduled by a DCI format to transmit the PUSCH with $N_{rep}$ repetitions | ~1630 |

| UE transmits $N_{rep}$ PUSCH repetitions by using the indicated counting of slots | ~1640 |

[Fig. 17]

1700

UE is configured for PUSCH transmission with repetitions and is provided a configuration for a TDRA table with a set of numbers of repetitions ~1710

UE is configured in SIB1 a counting of slots, wherein the counting is based on available slots or consecutive physical slots ~1720

UE is indicated a value m in a DCI format, wherein the value provides a row index m + 1 to the indicated table that provides a number of repetitions ~1730

UE transmits a PUSCH with the indicated number of repetitions by counting repetitions based on the SIB1 configuration ~1740

[Fig. 18]

1800

UE is configured for PUSCH transmission with repetitions and is configured sets of numbers of repetitions and counting methods ~1810

UE is indicated in a DCI format a counting method, wherein the counting method is associated to a set of numbers of repetitions ~1820

UE transmits PUSCH repetitions using the indicated counting method and number of repetitions from the associated set of numbers of repetitions ~1830

[Fig. 19]

1900

```
┌─────────────────────────────────────────┐
│ UE is provided an UL-DL TDD configuration │
│ providing slot formats over a number of slots, and is │──1910
│ configured for PUSCH transmission with repetitions │
└─────────────────────────────────────────┘
                    │
                    ▼
┌─────────────────────────────────────────┐
│ UE is configured in SIB1 a counting of slots, wherein │──1920
│ the counting is based on available slots │
└─────────────────────────────────────────┘
                    │
                    ▼
┌─────────────────────────────────────────┐
│ UE is scheduled by a DCI format to transmit the │──1930
│ PUSCH with $N_{rep}$ repetitions │
└─────────────────────────────────────────┘
                    │
                    ▼
```

1940

No ◄───── Is it possible to transmit in the
available slot? ─────► Yes

1970

```
┌─────────────────────────┐        ┌─────────────────────────┐
│ UE does not transmit the PUSCH │   1950 │ UE transmits the PUSCH repetition in │
│ repetition in the slot │            │ the slot │
└─────────────────────────┘        └─────────────────────────┘
```

1980

```
┌─────────────────────────┐   1960 ┌─────────────────────────┐
│ UE does not update the count of │    │ UE updates the counts of PUSCH │
│ PUSCH repetitions │               │ repetitions │
└─────────────────────────┘        └─────────────────────────┘
```

[Fig. 20]

2000

UE is provided an UL-DL TDD configuration providing slot formats over a number of slots, and is configured for PUSCH transmission with repetitions ~2010

UE is configured in SIB1 a counting of slots, wherein the counting is based on available slots ~2020

UE is scheduled by a DCI format to transmit the PUSCH with $N_{rep}$ repetitions ~2030

2040
Available slot?

No ← 2050
UE does not update the count of available slots

Yes → 2060
UE updates the count of available slots

2070
Is it possible to transmit in the available slot?

No ← 2080
UE does not transmit the PUSCH repetition in the slot

Yes → 2090
UE transmits the PUSCH repetition in the slot

[Fig. 21]

2100

| UE is indicated/configured to transmit a PUSCH with repetitions over a number of slots | 2110 |

↓

| UE is provided a configuration for counting of repetitions, wherein a count of repetitions can be updated when a slot is determined available based on a first information associated to the configured counting of repetitions | 2120 |

↓

| UE determines a first slot of the number of slots as available based on the first information | 2130 |

↓

| UE determines the first slot of the number of slots A available based on a second information | 2140 |

↓

| UE transmits a PUSCH repetition in the first slot and increments the count of repetitions | 2150 |

[Fig. 22]

2200

| UE is configured/indicated to transmit a first PUSCH with $N_{rep}$ repetitions using a counting of available slots | 2210 |

↓

| UE is scheduled by a DCI format to transmit a second PUSCH or a PUCCH with repetitions in n = $N_{rep}$ - 1, $N_{rep}$ slots, wherein the second PUSCH transmission or the PUCCH transmission, respectively, have higher priority than the first PUSCH transmission | 2220 |

↓

| UE does not transmit repetitions of the first PUSCH transmission in slots n = $N_{rep}$ - 1, $N_{rep}$ | 2230 |

↓

| UE resumes repetitions of the first PUSCH transmission in an available slot and transmits the PUSCH repetition of the first PUSCH in slot m with the same RV as the RV associated to the repetition of the first PUSCH scheduled in slot n = $N_{rep}$ - 1, $N_{rep}$ | 2240 |

[Fig. 23]

```
        ┌2320
┌──────────────────┐        ┌──────────────────┐
│                  │◄──────►│   TRANSCEIVER    │∿2300
│                  │        └──────────────────┘
│    PROCESSOR     │
│                  │        ┌──────────────────┐
│                  │◄──────►│     MEMORY       │∿2310
└──────────────────┘        └──────────────────┘
```

[Fig. 24]

```
        ┌2420
┌──────────────────┐        ┌──────────────────┐
│                  │◄──────►│   TRANSCEIVER    │∿2400
│                  │        └──────────────────┘
│    PROCESSOR     │
│                  │        ┌──────────────────┐
│                  │◄──────►│     MEMORY       │∿2410
└──────────────────┘        └──────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020206083 A1

- US 2020221474 A1

**Non-patent literature cited in the description**

- **ASUSTEK**. Remaining issue of PUSCH enhancements for NR URLLC. *R1-2004572-XP052345944; Author: Asustek; Reference: 3GPP TSG RAN WG1 Meeting #101e*
- NR; Physical channels and modulation'' (''REF1). *3GPP TS 38.211 v16.4.0*
- NR; Multiplexing and channel coding'' (''REF2). *3GPP TS 38.212 v16.4.0*

- NR; Physical layer procedures for control'' (''REF3). *3GPP TS 38.213 v16.4.0*
- NR; Physical layer procedures for data'' (''REF4). *3GPP TS 38.214 v16.4.0*
- NR; Medium Access Control (MAC).protocol specification'' (''REF5). *3GPP TS 38.321 v16.3.0*
- NR; Radio Resource Control (RRC) protocol specification'' (''REF6). *3GPP TS 38.331 v16.3.1*